Europäisches Patentamt

(19) European Patent Office

Office européen des brevets

(11) Publication number: **0 282 100 B1**

# EUROPEAN PATENT SPECIFICATION

(45) Date of publication of patent specification:
27.02.91 Bulletin 91/09

(51) Int. Cl.⁵: **F21M 3/08**

(21) Application number: **88104102.4**

(22) Date of filing: **11.03.88**

(54) Vehicular headlight and method of producing an optically effective system of same.

The file contains technical information submitted after the application was filed and not included in this specification

(30) Priority: **11.03.87 DE 3707751**
**25.04.87 DE 3713867**

(43) Date of publication of application:
**14.09.88 Bulletin 88/37**

(45) Publication of the grant of the patent:
**27.02.91 Bulletin 91/09**

(84) Designated Contracting States:
**AT BE CH DE ES FR GB GR IT LI LU NL SE**

(56) References cited:
**US-A- 4 481 563**
**US-A- 4 495 552**
**JOURNAL OF THE ILLUMINATING EN-GINEERING SOCIETY, vol. 2, no. 1, October 1972, pages 36-42, Illuminating Engineering Society, New York, US; R.J.DONOHUE et al.: "Computer design of automotive lamps with faceted reflectors"**

(73) Proprietor: **EASTMAN KODAK COMPANY (a New Jersey corporation)**
**343 State Street**
**Rochester New York 14650 (US)**
Proprietor: **KODAK AKTIENGESELLSCHAFT**
**Hedelfingerstrasse P.O. Box 600345**
**D-7000 Stuttgart 60 (DE)**

(72) Inventor: **Strobel, Joseph R.**
**Hermannstrasse 38**
**D-7065 Winterbach (DE)**
Inventor: **Staiger, Ulrich**
**Hoehenringweg 25**
**D-7000 Stuttgart 75 (DE)**
Inventor: **Castro, Peter E.**
**c/o Eastman Kodak Company Kodak Park**
**Rochester, N.Y. 14650 (US)**

(74) Representative: **Lewandowsky, Klaus et al**
**Kodak Aktiengesellschaft Postfach 600345**
**Hedelfinger Strasse**
**D-7000 Stuttgart 60 (DE)**

EP 0 282 100 B1

## Description

The invention relates to a method for producing an optically effective arrangement comprising a reflective surface, said arrangement having a light source related to an optical axis which extends in alignment with the optical arrangement for distributing light of said light source reflected by said reflective surface according to a desired light pattern, in particular for application with a vehicular headlight.

Due to legal regulations directed to traffic safety, some known automobile headlights are provided with a masking element arranged in the beam of light between the reflector and a distributor lens in order to meet specific requirements with respect to illumination range, color uniformity, the illumination pattern on the roadway and its marginal area, and light/dark delimitation criteria.

The use of such masking elements, however, is one of the main reasons why such headlights mentioned can neither produce their full light output, nor are they free from the occurrence of color fringes, which runs counter to the requirement for emitting a uniformly colored light.

An automobile headlight is known from DE-AS 18 02 113 by means of which a sharp light/dark delimitation (low beam headlights) is to be achieved without the use of a masking element. For this purpose, the reflector comprises two narrow, axially symmetrical sectors forming the main mirror surface regions which effect the sharp light/dark delimitation. Two parabolic additional mirror surfaces supplement these surfaces. Thus, the known reflector consists of four individual surfaces adjoining at four boundary edges. Such boundary edges cause the reflected light to form irregular light beams directed at the surface to be illuminated, so that a continuous, i.e. smooth, light distribution of high intensity is impossible.

A reflector known from DE-OS 33 41 773 shows a similar structure. Also in this case, the object of distributing the light rays reflected by the reflector in their entirety below the light/dark delimitation, is attained incompletely and discontinuously. The known reflector also consists of two parabolic sectors which are arranged symmetrically around its horizontal axis and to which adjoin two pairs of so-called deflecting surfaces. Instead of four surfaces known from the reflector according to DE-AS 18 02 113, the reflector of DE-OS 33 41 773 comprises six surfaces which adjoin at six boundary edges and which, however, do not substantially improve the disadvantages of discontinuity of light distribution, even though the adjoining boundary edges of the individual reflector surfaces allegedly do not show discontinuities.

The article "Computer Design of Automotive Lamps With Faceted Reflectors", Donohue and Joseph, J. of I.E.S./1972, pp. 36-42 describes an automotive lamp in which the reflector is divided into segments (facets) in such a manner that the reflector alone produces the pattern and lens fluting is eliminated. The many facets, as shown in Fig. 12 of that article, have sharp edges and discontinuities between them. Since each facet is a paraboloidal surface, the intersections, or junctions, between the surfaces necessarily are not smooth.

US-Patent 4 495 552 discloses a reflector for a vehicle lamp, which consists of a plurality of grid sections. Each of the grid sections shows generally a concave shape both in horizontal and in vertical cross section.

US-A-4 481 563 concerns an automotive headlight with a reflective surface which is formed of two edge ellipsoids and a center ellipsoid. In the sense of this prior art its ellipsoidal reflective surface is the optically effective surface. The junctions 17 and 18 of these three ellipsoidal surfaces are alleged to be smoothly and continuously formed. This cannot be understood in the sense of the invention because the alleged smoothness of the known embodiment does not contribute to the desired optical effect of the surface. In column 3, lines 53 to 65, these junctions 17 and 18 have been described as having a curvature with a radius of less than 0.05 inches. This proves that the junctions between the ellipsoidal surfaces are not smooth in a mathematical sense, but have more or less a rounded surface in order to facilitate manufacturing. Junctions of this kind are always disturbing factors in connection with an optimum distribution of light by a reflector.

It is the object of the invention to provide a headlight that illuminates a surface to be illuminated with a desired light distribution by optimal utilization of the light source of the headlight, particularly under the consideration of the legal regulations in several countries.

The above object is attained by a method for producing an optically effective arrangement comprising a reflective surface, said arrangement having a light source related to an optical axis which extends in alignment with the optical arrangement for distributing light of said light source reflected by said reflective surface according to a desired light pattern, said method is characterized by the steps of

formulating an initial mathematical representation of at least a region of an approximated surface of said reflective surface,

mathematically manipulating of said initial representation until the resulting mathematical surface representation achieves the desired optical properties,

2

deriving from the resulting mathematical representation computer input data in computer input format, and

inputting said data to a computer for controlling an apparatus by which the mathematical representation of said optical surface is reproduced in physical form.

The physical form can be a vehicular headlight produced by the above-mentioned method comprising an optically effective arrangement having a reflective surface,

a light source related to an optical axis which extends in alignment with the optically effective arrangement. This vehicular headlight is characterized in that said reflective surface shows axial asymmetry over its entire axial length, said surface having a mathematically continuous shape such that the beam of light reflected by said reflective surface distributes the light of said light source according to the distribution of the light pattern desired by optimally utilizing the light emitted by the light source.

The optically effective arrangement may be represented by the reflector surface itself.

The optically effective arrangement may also be represented by the surface of an optical element arranged in the light beam reflected by the reflector surface.

The optically effective arrangement may also be a combination of the reflector surface and a surface of the optical element in the light beam reflected by the reflector surface.

The surface or surfaces of the optically effective arrangement according to the invention satisfy the following single mathematical formula :

$$X = \frac{\dfrac{rho^2}{R(phi)}}{1 + \sqrt{1-(K(phi)+1)\cdot \dfrac{rho^2}{R(phi)}}} + \sum_{n=0}^{n=ne} AK_n(phi)\cdot rho^n,$$

wherein

$$R(phi) = \sum_{m=0}^{m=me} [Rc_m\cdot\cos(m\cdot phi)+Rs_m\cdot\sin(m\cdot phi)],$$

$$K(phi) = \sum_{i=0}^{i=ie} [Kc_i\cdot\cos(i\cdot phi)+Ks_i\cdot\sin(i\cdot phi)],$$

$$AK_n(phi) = \sum_{k=0}^{k=ke} [AKc_{nk}\cdot\cos(k\cdot phi)+AKs_{nk}\cdot\sin(k\cdot phi)]$$

and wherein

X represents a linear cylindrical coordinate of the headlight axis, which extends substantially in the direction of the light beam produced by the optically effective surface,

rho is the radius vector of said cylindrical coordinates,

phi represents the polar angle of said cylindrical coordinates of the loci,

n represents integers from 0 through 50, preferably through 10,

m, i and k represents integers from 0 through at least 3, preferably through 20,

R(phi) represents a coefficient which depends on phi and defines the limit value of the radii of curvature of the conic part of the surface at the apex with axial planes extending through the headlight axis when X = 0,

K(phi) represents a conic section coefficient as a function of phi,

$AK_n(phi)$ represents one of ne + 1 different aspheric coefficients as a function of phi,

3

$Rc_m$ and $Rs_m$ each represent one of me + 1, and

$Kc_i$ and $Ks_i$ each represent one of ie + 1 different constant parameters,

$AKc_{nk}$ and $AKs_{nk}$ each represent one of (ne + 1)·(ke + 1) different constant parameters.

The above optical surface formula is a variation of a known formula for a surface of rotation having coefficients R, K, AKn which are independent of phi. In this known formula, each value of X produces a certain value of rho which is thus independent of phi. Due to the dependency of the above coefficients on phi in this representation, each value of X produces a value of rho which is dependent on phi. Thus, the radius vector rho is not only a function of X, as is the case in the known formula, but also a function of phi. The designations for K and AKn as "conic section coefficients" and "aspheric coefficients", respectively, result from the known formula which contains the coefficients independent of phi. In connection with the known surfaces of rotation, the designation "basic radius" for R is also commonly used.

The optically effective system of a headlight according to the above formula can be calculated in that for me and ie, preferably 20, values of each of the parameters $Rc_m$, $Rs_m$, $Kc_i$ and $Ks_i$ and for (ne + 1)·(ke + 1) values of the parameters $AKc_{nk}$ and $AKs_{nk}$ wherein preferably ne = 10 and ke = 20, the radius of curvature coefficient R(phi), the conic section coefficient K(phi), and the aspheric coefficients $AK_n$(phi) are determined.

Because of the mutual dependency of the coefficients in the foregoing optical surface formula, mathematical manipulation of the representation of one particular region of the surface representation causes changes in other regions of the representation, which makes the overall mathematical process of arriving at desired surface representation very complex and time-consuming. Accordingly, a preferred method according to the invention for mathematically producing the desired optical surface includes the step of mathematically representing an approximation of that surface with mathematically represented surface segments in a manner that allows individual segments to be mathematically manipulated without influencing the optical properties of other regions of the representation. Preferably, such a manner of mathematical representation uses bivariate tensor product splines. Such splines, in turn, are represented and subsequently altered, preferably either by the so-called Bezier method or by the so-called B-spline method, starting with the determination of initial bivariate polynomials which describe surface segments and are equal at the common sides of adjacent surface segments through the second derivative (continuity at the common sides of the segments).

This can be realized by the determination of initial bivariate polynomials which describe surface segments of an approximate surface to a known optical surface, e.g. a paraboloid.

In a preferred realization of this method initial bivariate polynomials are determined describing initial surface segments having desired optical properties only of an initial region of the optically effective surface. Subsequent further bivariate polynomials are determined describing further initial surface segments located adjacent to the initial region until an approximate surface to the desired optically effective surface is achieved.

In both of said realizations, said approximate surfaces are, step by step, locally changed by varying the coefficients of the bivariate polynomials while retaining said continuity through the second derivatives without influencing optical properties of other regions of said approximate surface until the resulting representation of said optical surface achieves the desired optical properties.

Regardless of the method used to devise the mathematical representation of the desired optical surface in accordance with the invention, the resulting representation is then expressed in computer language and is used as the input to a computer that controls a machine tool to reproduce the mathematical surface representation in physical form.

Due to the asymmetry of the plurality of sections intersecting the reflector and/or the optical element, each reflective spot of the reflector illuminates a definite area on the surface to be illuminated, but a region of the illuminated surface may be illuminated from more than one reflector spot, i.e., the shape of the reflector has been calculated and determined such that the light rays reflected by the reflective spots of the reflector distribute the available amount of light on the surface to be illuminated according to the brightness desired at the various spots so that an undesired brightness increase or decrease is avoided and optimal utilization of the available light source is achieved.

Consequently, light losses caused when the light beam is formed by means of the optically effective surface according to the invention are minimal, and the amount of light emitted by the light source can be fully utilized.

In addition, an improved lateral field illumination as well as a gradual, instead of an abrupt, light/dark delimination is achieved, which is desired with respect to road traffic safety. Furthermore, it is not necessary to dissipate heat developed at a masking element due to direct and indirect irradiation.

Generally, a reflective filter layer can be used expediently for heat removal from the reflector, particularly a reflector made of plastic material.

4

Similarly, a lens or other optical element in the light path from the reflector can be protected by a reflective filter layer on the reflector itself and/or by a cold mirror, preferably arranged at an inclined angle in front of the reflector opening. If, for example, such a cold mirror is arranged in front of the reflector at an angle of 45 degrees, the optical axis of the light beam reflected by the mirror surface will extend normal to the axis of the reflector so that an L-shaped configuration of the headlight is obtained, which fact considerably reduces the space required for installing such a system, such reduction is advantageous in an automobile. The optical means interposed in the light beam reflected by the cold mirror surface is then transilluminated only by the cold light and, as a result, can be manufactured of thermosensitive material. In this case, the axis of the headlight forms a right angle, the legs of which are the reflector axis and the optical axis of the optical element arranged in front of the reflector.

Because the headlight according to the invention does not require any of the usual diffusion screens, the automobile body designer is substantially free in shaping the headlight front glass.

A lens arranged in front of the reflector opening can either consist of a colored material or can be provided with a color filter coating to meet local requirements for coloring the light emitted by the reflector.

Surprisingly, tests conducted have shown that the optically effective surface according to the invention produces not only an optimal low beam light, but also creates an excellent high beam when using a double-filament lamp, especially because the high beam is not impaired by a masking element.

In summary, a headlight designed according to the invention avoids the use of masking elements and provides optimal utilization of the available light, achieves the desired light distribution with a considerable increase in total light output, and avoids the occurrence of color fringes.

An embodiment of a headlight and the methods according to the invention will now be described with reference to the drawing and the accompanying tables.

Fig. 1 shows a perspective view of a first embodiment of a headlight consisting of a reflector and a lens,

Fig. 2 is a schematic perspective view of a cross-section (normal to the headlight axis) of the optically effective surface of a headlight within the coordinate system, X, Y and Z, showing cylindrical coordinates X, rho and phi, for the illustration of the first and second embodiments.

Figs. 3a, 3b are a schematic representation of two of many possible examples for the illumination of a surface to be illuminated which can be achieved when using the headlight according to the invention,

Fig. 4 is a projection, parallel to the headlight axis "X", onto a plane normal to the X axis, of the optically effective surface of the headlight divided up into surface segments,

Fig. 5 shows an enlarged representation of one surface segment according to Fig. 4, and

Fig. 6 shows the optical path of the light rays between the optically effective surface according to Fig. 1 and a surface to be illuminated.

Table I shows the parameters for calculating the reflector surface by means of the above-mentioned formula,

Table II shows the parameters for calculating the surfaces of a lens arranged in front of the reflector which lens, together with the reflector surface, forms the optically effective system of a first embodiment of the headlight, by means of the abovementioned formula,

Tables III and IV show the coefficients (b) of the bivariate polynomials for defining the surface segments of the optically effective surface formed of the reflector surface and a lens surface according to the first embodiment.

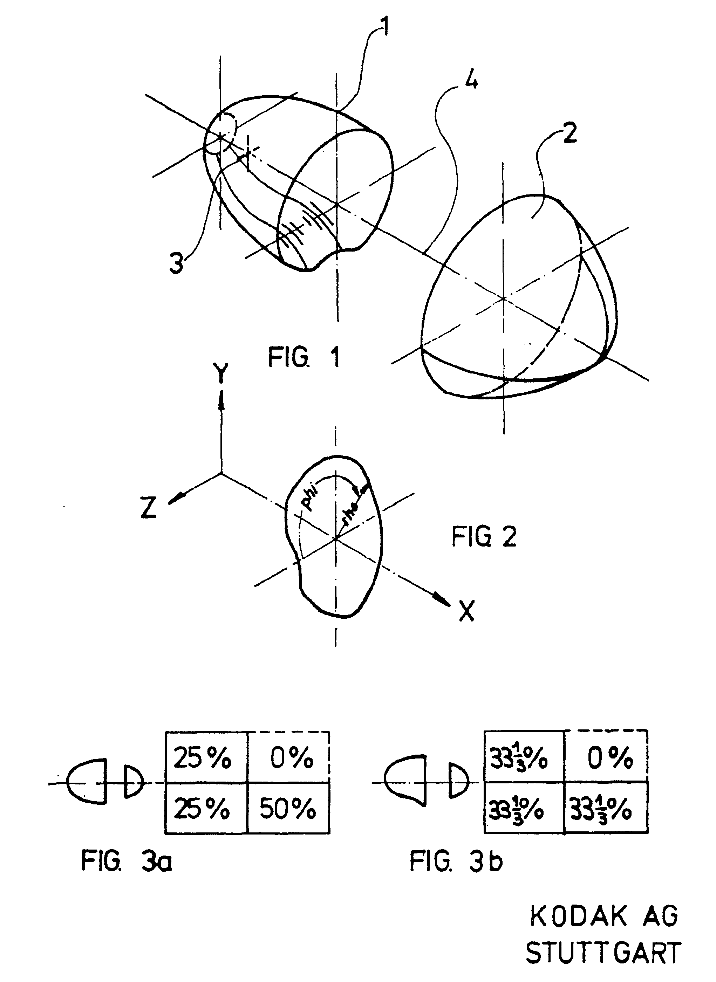

As shown in Fig. 1, the optically effective surface of the headlight according to a first embodiment of the invention is designed asymmetrically on a reflector 1. A lens 2 is arranged coaxially to the headlight axis 4. Reference numeral 3 designates a light source arranged within the reflector (e.g., a double filament lamp). The arrangement of the above-mentioned components on the headlight axis 4 represents one of several possible embodiments.

In addition to the surface of reflector 1, it is possible to form at least one surface of lens 2 such that one surface is characterized by point asymmetry in all planes cutting said surface, which is a part of the optically effective surface.

Moreover, lens 2 may be arranged in an offset and/or tilted relation to the headlight axis 4 to effect light emission in one or several directions other than the main direction of emission.

The glass or plastic lens 2 itself can also be used for sealing the front of the headlight. In this case, a separate front glass having an optically effective surface pattern is not required. For this purpose, at least the outer surface of the lens is scratch-resistant. Instead of the lens being used as a headlight component, a planar plate can be inserted, e.g. in the second embodiment.

For an intense light emission a double-filament lamp is provided as light source 3 so that the headlight can be used in the low and high beam mode.

The reflector surface and/or the optically effective lens surface can be described by means of the formula given in the introduction to the description.

The $12 \times 21 = 252$ parameters $Rc_m$, $Rs_m$, $Kc_i$, $Ks_i$, $AKc_{nk}$ and $AKs_{nk}$ of a reflector surface satisfying the mentioned formula are given in Table I, Pages 1 to 3. Together with a lens which is placed in front of the reflector and the two surfaces of which are defined by the parameters given in Table II, the reflector surface forms the optically effective surface of a first embodiment of the headlight according to the invention.

The addition of E − 02 or E + 02 at the end of the numerical values given in Tables I and II means that such values must be multiplied by $10^{-2}$ or $10^{+2}$ respectively.

The values given in Table II indicate that the first lens surface has an infinitely large radius of curvature and thus represents a plane. As the second lens surface is defined only by the parameter values for me = ie = ke = 0, said surface represents a surface of rotation about the headlight axis.

Using the above-described embodiment of a headlight an illumination of the surface to be illuminated will be achieved as stated in Fig. 3b in a schematically simplified form.

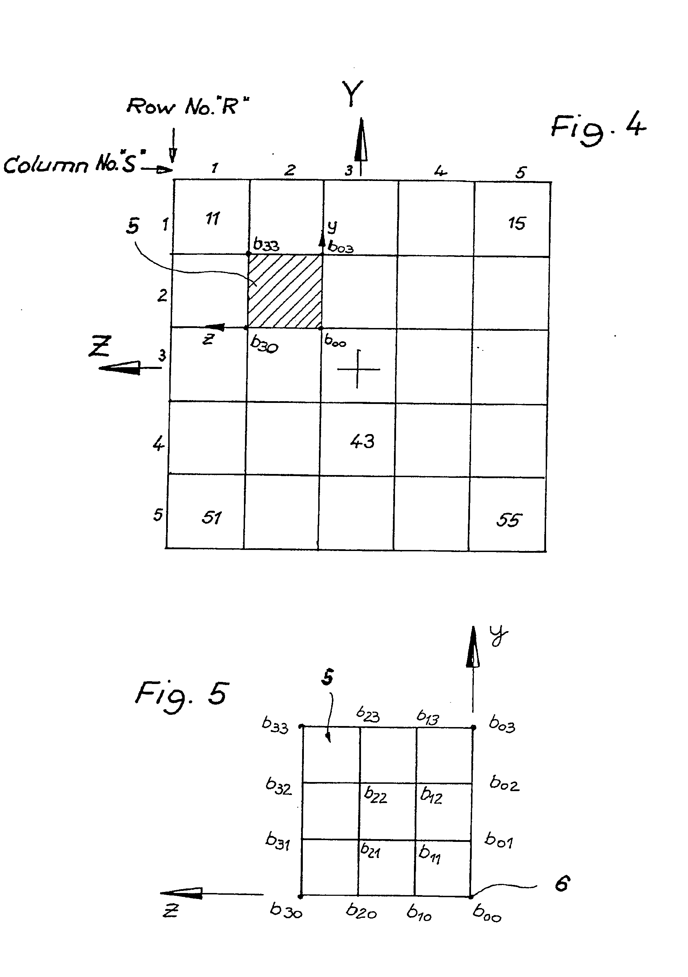

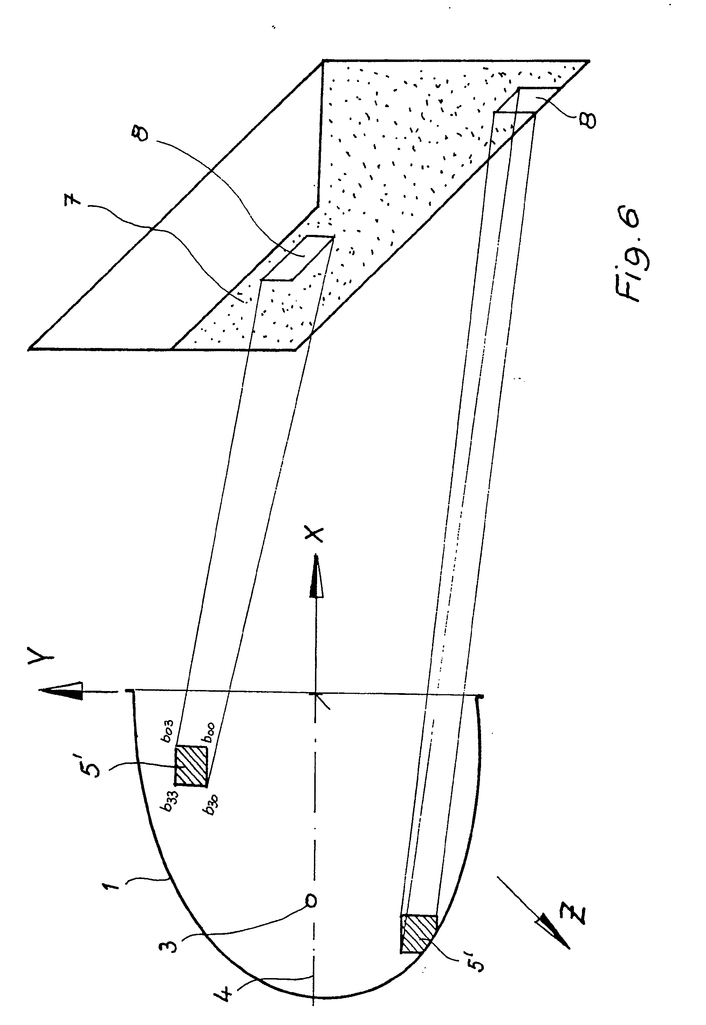

An initial surface used in performing the first step of a first method is based on an optically effective surface of a known shape, e.g., a paraboloid of revolution. By calculation, the initial surface is divided up into 100 initial surface segments 5′ (Fig. 6), the projections of which, indicated on a plane arranged normal to the headlight axis X, are designated with the reference numeral 5 (Figs. 4 and 5). For the purpose of simplification, the projections 5 are represented by only 25 surface segments 5′ (Fig. 4).

Such sub-division results from the fact that the initial surface is dissected by means of two families of parallel planes, the planes of one of the families extending normal to the planes of the other family and the planes of both families extending parallel to the headlight axis.

With the initial surface segments 5′ having thus been calculated, the corners can now be determined. In Figs. 4 and 6, the Cartesian coordinates X, Y and Z of the headlight are represented, the X-axis defining the headlight axis. The X-coordinates of the corners $b_{00}$, $b_{03}$, $b_{30}$ and $b_{33}$ of each surface segment 5′ are inserted in the following bivariate polynomial as corner coefficients :

$$
\begin{aligned}
X(y,z) = \\
(1-y)^3 \quad &\cdot [b_{00} \cdot (1-z)^3 + b_{10} \cdot 3 \cdot (1-z)^2 \cdot z + b_{20} \cdot 3 \cdot (1-z) \cdot z^2 + b_{30} \cdot z^3] \\
+3 \cdot (1-y)^2 \cdot y \quad &\cdot [b_{01} \cdot (1-z)^3 + b_{11} \cdot 3 \cdot (1-z)^2 \cdot z + b_{21} \cdot 3 \cdot (1-z) \cdot z^2 + b_{31} \cdot z^3] \\
+3 \cdot (1-y) \quad \cdot y^2 \cdot &[b_{02} \cdot (1-z)^3 + b_{12} \cdot 3 \cdot (1-z)^2 \cdot z + b_{22} \cdot 3 \cdot (1-z) \cdot z^2 + b_{32} \cdot z^3] \\
+ \qquad y \quad \cdot &[b_{03} \cdot (1-z)^3 + b_{13} \cdot 3 \cdot (1-z)^2 \cdot z + b_{23} \cdot 3 \cdot (1-z) \cdot z^2 + b_{33} \cdot z^3]
\end{aligned}
$$

wherein "y" and "z" (Fig. 5) in contrast to "X" and "Z" (Fig. 4), are Cartesian coordinates starting from corners 6 (Fig. 5) of each surface segment having the "X" coordinate "$b_{00}$".

If the Bezier method is used, the remaining coefficients of the bivariate polynomials of each surface segment, are then calculated according to this method such that the polynomials are identical in the lines of contact of adjacent surface segments through the second derivatives. The Bezier method is disclosed, for example, in W. Boehm, Gose, Einfuehrung in die Methoden der Numerischen Mathematik, Vieweg Verlag, Braunschweig, 1977, Pages 108-119. The bivariate polynomials thus calculated result in surface segments which are approximations to the initial surface segments. If then the corner coefficients of the polynomials of surface segments are varied at desired loci of the optically effective surface and subsequently, as described above, the remaining coefficients are calculated, a local change of the shape of the surface described by the polynomials will be possible, without changing other regions of that surface.

In order to obtain an optically effective surface having the desired properties, the corner coefficients of the polynomials and subsequently the remaining coefficients are step by step changed such that the desired light distribution is achieved, which can be checked each time a change has been made. This procedure is continued until the resulting mathematical surface representation achieves the desired optical properties.

The larger the number of the surface segments 5′, the more the desired light distribution on the surface to be illuminated is achieved. The same applies to the degree of the bivariate polynomials, that's to say the higher the degree of the polynomials, the more the desired light distribution on the surface to be illuminated is achieved.

Proceeding from corner 6, each projection 5 of a surface segment 5′ extends in "y" and "z" directions by the standardized unit of 0 to 1. In the embodiment, this unit is characterized by a polynomial having sixteen b coefficients ($b_{00}$ through $b_{33}$). For each surface segment the values for "y" and "z" are inserted in the polynomial and the coordinate "X" is calculated. The projections 5 of the surface segments 5′ may be square or rectangular. The corners 6 of adjacent surface segments must, however, coincide in order to obtain the desired continuity at the contacting lines of adjacent surface segments and thus a continuity of the total reflector surface.

Fig. 5 shows an enlarged representation of a projection 5 of a surface segment 5' of the surface of reflector 1. Part of the surface segment 5' directs a light beam to the surface 7 to be illuminated (Fig. 6). In this connection, the shape of the projected image is defined by the part of the surface segment 5' forming a curve in the Y and Z directions. Depending on the required shape of the surface 7 to be illuminated, the individual adjacent surface segments are oriented such that each surface segment 5' corresponds to an area 8 on surface 7. If desired, areas 8 of different surface segments 5' may overlap or even coincide. The distribution of the amount of light on the surface 7 to be illuminated is not limited to uniformly distributing light across the total surface but, if desired, the light intensity may vary continuously across the surface to be illuminated.

In Tables III, Pages 1 through 20, and IV the "b" coefficients of the surface segments of the first embodiment of a headlight are given, said segments being described by the above-mentioned formula of bivariate polynomials. The surface segments are designated "segments RS" in the above tables, with R and S representing the lines and columns, respectively, shown in Fig. 4.

The surface segments given in Table III form the reflector surface and the values given in Table IV define the two surfaces of a lens which is arranged in front of the reflector and, together with the reflector surface, forms the optically effective surface of the headlight effecting the illumination of the surface to be illuminated given approximately in Fig. 3b.

As will be apparent from Table IV, in this embodiment, too, the first lens surface is a plane. It follows from the values b = 0 that for all loci of all surface segments, X will always be 0.

A headlight in compliance with the values given in Tables I and II or III and IV is designed such that the distance between the planar surface of lens 2 which is arranged coaxially to the axis of reflector 1 and the apex of the reflector amounts to 118 millimeters.

The preferred method for representing and manipulating the coefficients of the bivariate polynominals of the segments representing an optically effective surface for the headlight uses the Basis-spline Method according to De Boor (see "A PRACTICAL GUIDE TO SPLINES", Applied Mathematical Sciences, Volume 27, Springer Verlag Berlin, Heidelberg, New York).

According to this method, as in the previously described method, first bivariate polynomials are determined describing initial surface segments having desired optical properties of a region of the optically effective surface and beginning with this initial region, further bivariate polynomials are determined located adjacent to said region, until an approximate surface to said optical surface is achieved.

The achieved approximate surface is then changed locally by varying coefficients of said Basis splines while retaining continuity through the second derivatives within the varied region, without influencing optical properties of other regions of said approximate surface. Continuing in this manner the approximate surface is varied until the resulting representation of said optical surface achieves desired optical properties.

In this B-spline method for representing the optical surface, the X-range of 0 to 67 mm and phi-range of 0 to 360 degrees are divided into sub-intervals by means of partition points. Knot sequences for said ranges and sub-intervals are chosen so that fourth order B-splines in the respective variables are continuous through the second derivative. The B-splines in the X variable satisfy "not-a-knot" end conditions. The B-splines in the phi variable satisfy periodic end conditions. Within the range of the variables, division points and knot sequences the resulting B-spline sequences will be denoted by $B_k(x)$, k = 1 to 15, and $P_j(phi)$, j =1 to 15. Said reflector surface is then represented by means of the expression

$$\text{rho} = \sum_{k=1}^{15} \sum_{j=1}^{15} b_{kj} B_k(x) P_j(phi)$$

where rho is the radius of said reflector surface at position x along the cylindrical coordinate (X-axis) axis and at angle phi with respect to the z-axis.

Referring to Fig. 2, a light source e.g. a halogen H4 lamp should be positioned so that the axis of its low beam filament is coincident with the x-axis with the end of the filament closest to the base located at x = 29 mm. Said lamp should be oriented so that its reference pin is at angle 75° as measured from the x-axis according to the diagram in Fig. 2. The H4 lamp has three pins to orient the lamp in a housing, one of them being the reference pin.

The data indicated in the Tables I to IV are generated by a computer, for instance of the type Micro-Vax 2000 using the FORTRAN language. In a subsequent step these data, representing a net of X, Y and Z coordinates, are transferred to a CAD (Computer Aided Design) Anvil programm as generated by the Manufacturing Consulting System Company, U.S.A. By this program the data are converted such that a numerically controlled machine of the Fidia Company, Turin, is controlled. Eventually, the numerically controlled machine controls a milling machine of the Bohner and Koehle Company in Esslingen, Germany, for producing a reflector for a vehicular headlight according to the invention.

Table I, Page 1

Reflector surface formula parameters for the first embodiment

_____

Reflector Surface

| m | $Rc_m$ | $Rs_m$ |
|---|---|---|
| 0 | 0.301025616E+02 | 0.000000000E+00 |
| 1 | -0.776138504E+00 | 0.320000048E+01 |
| 2 | 0.133370183E+01 | 0.130136414E+01 |
| 3 | 0.215025141E+00 | 0.869100269E+00 |
| 4 | 0.268470260E+00 | 0.200731876E+00 |
| 5 | 0.184987154E+00 | 0.351886168E-01 |
| 6 | 0.129671173E+00 | -0.403600103E-01 |
| 7 | 0.637230940E-01 | 0.320512819E-02 |
| 8 | 0.657042305E-01 | -0.106397102E-01 |
| 9 | 0.423533490E-01 | -0.160708906E-01 |
| 10 | 0.335088888E-01 | -0.192834327E-01 |
| 11 | 0.137164324E-01 | -0.874839426E-02 |
| 12 | 0.139906237E-01 | -0.376991649E-02 |
| 13 | 0.732057473E-02 | -0.646410508E-02 |
| 14 | 0.422798314E-02 | -0.420884650E-02 |
| 15 | -0.408471796E-05 | -0.212006914E-02 |
| 16 | -0.704443620E-04 | 0.516378266E-03 |
| 17 | -0.860155419E-04 | -0.110971614E-02 |
| 18 | -0.110987691E-02 | -0.342223479E-03 |
| 19 | -0.897140376E-03 | 0.107453809E-03 |
| 20 | -0.131258234E-02 | 0.000000000E+00 |

| i | $Kc_i$ | $Ks_i$ |
|---|---|---|
| 0 | -0.429484813E+00 | 0.000000000E+00 |
| 1 | -0.163727284E-01 | 0.337263117E-01 |
| 2 | -0.198936600E-01 | -0.608890656E-02 |
| 3 | -0.308477079E-01 | 0.338959596E-01 |
| 4 | -0.141336284E-01 | -0.271903061E-02 |
| 5 | -0.167193963E-01 | 0.727648203E-03 |
| 6 | -0.595014034E-02 | -0.238452148E-03 |
| 7 | -0.601753028E-02 | 0.677091093E-05 |
| 8 | -0.324424750E-02 | -0.259145831E-03 |
| 9 | -0.339949576E-02 | -0.629192629E-03 |
| 10 | -0.153724151E-02 | 0.366436132E-04 |
| 11 | -0.113067112E-02 | -0.259073714E-03 |
| 12 | -0.665049967E-03 | -0.114321751E-04 |
| 13 | -0.521768369E-03 | -0.175471175E-03 |
| 14 | -0.176222083E-03 | 0.411897732E-04 |
| 15 | -0.167376998E-04 | -0.221832787E-04 |
| 16 | 0.666650797E-06 | 0.468744564E-05 |
| 17 | -0.647191699E-05 | -0.125775018E-04 |
| 18 | 0.572639607E-04 | 0.108406081E-04 |
| 19 | 0.325077313E-04 | 0.152450517E-04 |
| 20 | 0.541442594E-04 | 0.000000000E+00 |

Table I, Page 2

Parameters $AKc_{nk}$ and $AKs_{nk}$

| k | $AKc_{4k}$ | $AKs_{4k}$ |
|---|---|---|
| 0 | 0.231351989E-06 | 0.000000000E+00 |
| 1 | 0.428899918E-06 | -0.108098732E-06 |
| 2 | -0.760933804E-06 | -0.171556708E-06 |
| 3 | -0.139034183E-06 | -0.114824840E-06 |
| 4 | -0.139181386E-06 | -0.900163969E-08 |
| 5 | -0.113484337E-06 | -0.113165928E-07 |
| 6 | -0.692201245E-07 | 0.958364387E-08 |
| 7 | -0.388947559E-07 | -0.430786403E-08 |
| 8 | -0.350219486E-07 | 0.439361829E-08 |
| 9 | -0.254912711E-07 | 0.126138438E-09 |
| 10 | -0.181330145E-07 | 0.301827822E-08 |
| 11 | -0.818303372E-08 | 0.367433193E-09 |
| 12 | -0.757240546E-08 | 0.721395733E-09 |
| 13 | -0.434684382E-08 | 0.626818371E-09 |
| 14 | -0.232837908E-08 | 0.302391591E-09 |
| 15 | 0.757435359E-11 | 0.282154895E-09 |
| 16 | 0.501081833E-10 | -0.165543715E-09 |
| 17 | 0.278723188E-10 | 0.185979282E-09 |
| 18 | 0.615322577E-09 | -0.568771854E-10 |
| 19 | 0.499060558E-09 | 0.672723983E-11 |
| 20 | 0.747285538E-09 | 0.000000000E+00 |

| k | $AKc_{6k}$ | $AKs_{6k}$ |
|---|---|---|
| 0 | 0.389873399E-09 | 0.000000000E+00 |
| 1 | -0.517405133E-09 | 0.116609985E-09 |
| 2 | -0.987346505E-10 | -0.333227667E-09 |
| 3 | 0.961538761E-10 | 0.683053625E-10 |
| 4 | 0.199160759E-09 | -0.683418244E-10 |
| 5 | 0.757325818E-10 | 0.331761612E-11 |
| 6 | 0.618804033E-10 | 0.635190239E-11 |
| 7 | 0.236550982E-10 | 0.810501473E-12 |
| 8 | 0.311269008E-10 | -0.263245260E-12 |
| 9 | 0.153069516E-10 | -0.918383261E-12 |
| 10 | 0.111863867E-10 | 0.436905887E-11 |
| 11 | 0.429446358E-11 | -0.472278719E-12 |
| 12 | 0.451515603E-11 | 0.616508050E-12 |
| 13 | 0.244626543E-11 | -0.394652800E-12 |
| 14 | 0.715797983E-12 | 0.123305623E-11 |
| 15 | -0.109601896E-12 | -0.108762629E-12 |
| 16 | 0.197247490E-12 | -0.975652160E-13 |
| 17 | 0.946855192E-13 | -0.643161886E-13 |
| 18 | -0.479375138E-13 | 0.162114621E-12 |
| 19 | -0.169187338E-12 | 0.154258155E-13 |
| 20 | 0.253073865E-12 | 0.000000000E+00 |

Table I, Page 3

Parameters $AKc_{nk}$ and $AKs_{nk}$

| k | $AKc_{8k}$ | $AKs_{8k}$ |
|---|---|---|
| 0 | -0.237072296E-12 | 0.000000000E+00 |
| 1 | -0.400715346E-12 | 0.822888353E-13 |
| 2 | 0.279627689E-12 | -0.184683304E-12 |
| 3 | -0.163001548E-12 | -0.161179791E-12 |
| 4 | -0.160168487E-12 | -0.438313897E-13 |
| 5 | -0.796791834E-13 | 0.661726193E-14 |
| 6 | -0.462152595E-13 | 0.208456218E-14 |
| 7 | -0.309828591E-13 | 0.434925264E-14 |
| 8 | -0.241252882E-13 | -0.117592616E-14 |
| 9 | -0.168868959E-13 | 0.492526452E-14 |
| 10 | -0.805788603E-14 | 0.224656989E-14 |
| 11 | -0.616096672E-14 | 0.152796660E-14 |
| 12 | -0.332907991E-14 | 0.249806639E-15 |
| 13 | -0.262701330E-14 | 0.625937910E-15 |
| 14 | -0.385394236E-15 | 0.758992617E-15 |
| 15 | -0.193135632E-15 | -0.234130584E-15 |
| 16 | -0.171484070E-15 | -0.278481862E-16 |
| 17 | 0.382610016E-16 | -0.148401907E-15 |
| 18 | 0.308505036E-16 | 0.121764340E-15 |
| 19 | 0.208687007E-15 | -0.154399611E-15 |
| 20 | -0.266729468E-15 | 0.000000000E+00 |

| k | $AKc_{10k}$ | $AKs_{10k}$ |
|---|---|---|
| 0 | 0.713321483E-16 | 0.000000000E+00 |
| 1 | 0.533706811E-15 | -0.234348896E-15 |
| 2 | 0.164872968E-15 | -0.272667708E-16 |
| 3 | 0.687919021E-16 | -0.134748556E-15 |
| 4 | -0.162835300E-17 | -0.117704199E-17 |
| 5 | 0.246731742E-16 | -0.230461320E-17 |
| 6 | 0.667927093E-17 | 0.158436254E-17 |
| 7 | 0.126072927E-16 | 0.456377162E-18 |
| 8 | 0.409966370E-17 | 0.742187412E-18 |
| 9 | 0.626217680E-17 | 0.277419772E-17 |
| 10 | 0.311769925E-17 | 0.487166504E-18 |
| 11 | 0.297046067E-17 | 0.117760624E-17 |
| 12 | 0.141248674E-17 | 0.118570563E-18 |
| 13 | 0.103907576E-17 | 0.763942076E-18 |
| 14 | 0.544805755E-18 | 0.448408484E-19 |
| 15 | 0.206840560E-18 | 0.115951610E-18 |
| 16 | -0.632872999E-19 | -0.274282156E-19 |
| 17 | -0.108099972E-18 | 0.584383839E-19 |
| 18 | -0.214743921E-18 | -0.103994833E-19 |
| 19 | -0.149633902E-18 | -0.583100804E-19 |
| 20 | -0.305316901E-18 | 0.000000000E+00 |

Table II

Lens surface formula parameters for the first embodiment

---------------------------------------------------------------

First lens surface

| m | $Rc_m$ | $Rs_m$ |
|---|--------|--------|
| 0 | 0.999999999E+35 | 0.000000000E+00 |

---------------------------------------------------------------

Second lens surface

| m | $Rc_m$ | $Rs_m$ |
|---|--------|--------|
| 0 | -0.270000000E+02 | 0.000000000E+00 |

| i | $Kc_i$ | $Ks_i$ |
|---|--------|--------|
| 0 | -0.160000000E+01 | 0.000000000E+00 |

| k | $AKc_{4k}$ | $AKs_{4k}$ |
|---|------------|------------|
| 0 | 0.160000000E-05 | 0.000000000E+00 |

| k | $AKc_{6k}$ | $AKs_{6k}$ |
|---|------------|------------|
| 0 | -0.910000000E-08 | 0.000000000E+00 |

| k | $AKc_{8k}$ | $AKs_{8k}$ |
|---|------------|------------|
| 0 | 0.250000000E-11 | 0.000000000E+00 |

---------------------------------------------------------------

Note :
Rotational symmetry is indicated if only the value shown in the top row of a coefficient column (table 1) is other than zero, with values in all other rows being zero.

Table III, Page 1


Coefficients of the bivariate polynomials according to
the Bezier method for the first embodiment

------------------------------------------------------------

R E F L E C T O R   S U R F A C E


Segments(R,S)  R 1   S 1
b(s,r), wherein (s,r) are the indices of "b" according  to Fig.5

| s | 3 | 2 | 1 | 0 |
|---|---|---|---|---|
| r |  |  |  |  |
| 3 | 0.000 | 0.000 | 33.948 | 30.885 |
| 2 | 0.000 | 0.000 | 29.463 | 26.400 |
| 1 | 32.780 | 28.998 | 25.686 | 23.628 |
| 0 | 29.429 | 25.648 | 23.280 | 21.222 |

Segments(R,S)  R 1   S 2
b(s,r)

| s | 3 | 2 | 1 | 0 |
|---|---|---|---|---|
| r |  |  |  |  |
| 3 | 30.885 | 27.822 | 25.895 | 24.273 |
| 2 | 26.400 | 23.337 | 22.535 | 20.913 |
| 1 | 23.628 | 21.570 | 19.706 | 18.348 |
| 0 | 21.222 | 19.164 | 17.543 | 16.184 |

Segments(R,S)  R 1   S 3
b(s,r)

| s | 3 | 2 | 1 | 0 |
|---|---|---|---|---|
| r |  |  |  |  |
| 3 | 24.273 | 22.651 | 21.432 | 20.484 |
| 2 | 20.913 | 19.291 | 18.359 | 17.411 |
| 1 | 18.348 | 16.990 | 15.806 | 14.961 |
| 0 | 16.184 | 14.826 | 13.745 | 12.899 |

Segments(R,S)  R 1   S 4
b(s,r)

| s | 3 | 2 | 1 | 0 |
|---|---|---|---|---|
| r |  |  |  |  |
| 3 | 20.484 | 19.537 | 18.871 | 18.454 |
| 2 | 17.411 | 16.463 | 15.891 | 15.473 |
| 1 | 14.961 | 14.115 | 13.461 | 13.072 |
| 0 | 12.899 | 12.053 | 11.445 | 11.056 |

Segments(R,S)  R 1   S 5
b(s,r)

| s | 3 | 2 | 1 | 0 |
|---|---|---|---|---|
| r |  |  |  |  |
| 3 | 18.454 | 18.037 | 17.869 | 17.939 |
| 2 | 15.473 | 15.056 | 14.885 | 14.954 |
| 1 | 13.072 | 12.683 | 12.513 | 12.548 |
| 0 | 11.056 | 10.667 | 10.498 | 10.533 |

Table III, Page 2

```
Segments(R,S)   R 1   S 6
b(s,r)
        s       3            2            1            0
r
3          17.939       18.008       18.325       18.929
2          14.954       15.024       15.241       15.845
1          12.548       12.584       12.884       13.367
0          10.533       10.568       10.813       11.297

Segments(R,S)   R 1   S 7
b(s,r)
        s       3            2            1            0
r
3          18.929       19.534       20.422       21.674
2          15.845       16.449       17.102       18.353
1          13.367       13.851       14.703       15.714
0          11.297       11.780       12.501       13.512

Segments(R,S)   R 1   S 8
b(s,r)
        s       3            2            1            0
r
3          21.674       22.926       24.531       26.682
2          18.353       19.605       20.727       22.879
1          15.714       16.726       18.267       19.958
0          13.512       14.523       15.822       17.513

Segments(R,S)   R 1   S 9
b(s,r)
        s       3            2            1            0
r
3          26.682       28.834       31.382       35.462
2          22.879       25.031       26.047       30.127
1          19.958       21.648       24.163       26.856
0          17.513       19.203       21.274       23.967

Segments(R,S)   R 1   S10
b(s,r)
        s       3            2            1            0
r
3          35.462       39.543        0.000        0.000
2          30.127       34.208        0.000        0.000
1          26.856       29.549       33.989       39.038
0          23.967       26.660       29.743       34.793
```

Table III, Page 3

```
Segments(R,S)   R 2    S 1
b(s,r)
        s       3              2              1              0
r
3          29.429         25.648         23.280         21.222
2          26.079         22.298         20.874         18.816
1          23.915         21.136         18.775         16.958
0          22.144         19.364         17.257         15.440

Segments(R,S)   R 2    S 2
b(s,r)
        s       3              2              1              0
r
3          21.222         19.164         17.543         16.184
2          18.816         16.758         15.379         14.020
1          16.958         15.140         13.546         12.290
0          15.440         13.622         12.126         10.869

Segments(R,S)   R 2    S 3
b(s,r)
        s       3              2              1              0
r
3          16.184         14.826         13.745         12.899
2          14.020         12.662         11.683         10.837
1          12.290         11.033          9.968          9.176
0          10.869          9.613          8.602          7.810

Segments(R,S)   R 2    S 4
b(s,r)
        s       3              2              1              0
r
3          12.899         12.053         11.445         11.056
2          10.837          9.991          9.429          9.040
1           9.176          8.385          7.784          7.416
0           7.810          7.019          6.448          6.080

Segments(R,S)   R 2    S 5
b(s,r)
        s       3              2              1              0
r
3          11.056         10.667         10.498         10.533
2           9.040          8.651          8.482          8.517
1           7.416          7.047          6.878          6.897
0           6.080          5.711          5.546          5.564
```

Table III, Page 4

Segments(R,S)   R 2   S 6
b(s,r)

| s | 3 | 2 | 1 | 0 |
|---|---|---|---|---|
| r |   |   |   |   |
| 3 | 10.533 | 10.568 | 10.813 | 11.297 |
| 2 | 8.517 | 8.552 | 8.742 | 9.226 |
| 1 | 6.897 | 6.915 | 7.150 | 7.567 |
| 0 | 5.564 | 5.583 | 5.789 | 6.205 |

Segments(R,S)   R 2   S 7
b(s,r)

| s | 3 | 2 | 1 | 0 |
|---|---|---|---|---|
| r |   |   |   |   |
| 3 | 11.297 | 11.780 | 12.501 | 13.512 |
| 2 | 9.226 | 9.709 | 10.299 | 11.310 |
| 1 | 7.567 | 7.983 | 8.682 | 9.555 |
| 0 | 6.205 | 6.622 | 7.248 | 8.121 |

Segments(R,S)   R 2   S 8
b(s,r)

| s | 3 | 2 | 1 | 0 |
|---|---|---|---|---|
| r |   |   |   |   |
| 3 | 13.512 | 14.523 | 15.822 | 17.513 |
| 2 | 11.310 | 12.321 | 13.377 | 15.068 |
| 1 | 9.555 | 10.428 | 11.689 | 13.132 |
| 0 | 8.121 | 8.994 | 10.113 | 11.556 |

Segments(R,S)   R 2   S 9
b(s,r)

| s | 3 | 2 | 1 | 0 |
|---|---|---|---|---|
| r |   |   |   |   |
| 3 | 17.513 | 19.203 | 21.274 | 23.967 |
| 2 | 15.068 | 16.758 | 18.386 | 21.079 |
| 1 | 13.132 | 14.575 | 16.590 | 18.836 |
| 0 | 11.556 | 12.999 | 14.763 | 17.008 |

Segments(R,S)   R 2   S10
b(s,r)

| s | 3 | 2 | 1 | 0 |
|---|---|---|---|---|
| r |   |   |   |   |
| 3 | 23.967 | 26.660 | 29.743 | 34.793 |
| 2 | 21.079 | 23.772 | 25.498 | 30.547 |
| 1 | 18.836 | 21.082 | 24.247 | 27.825 |
| 0 | 17.008 | 19.254 | 21.952 | 25.529 |

Table III, Page 5

```
Segments(R,S)   R 3    S 1
b(s,r)
        s       3            2            1            0
r
3            22.144       19.364       17.257       15.440
2            20.372       17.592       15.739       13.922
1            19.129       16.647       14.486       12.755
0            18.096       15.615       13.602       11.871

Segments(R,S)   R 3    S 2
b(s,r)
        s       3            2            1            0
r
3            15.440       13.622       12.126       10.869
2            13.922       12.104       10.705        9.449
1            12.755       11.025        9.550        8.342
0            11.871       10.140        8.700        7.491

Segments(R,S)   R 3    S 3
b(s,r)
        s       3            2            1            0
r
3            10.869        9.613        8.602        7.810
2             9.449        8.192        7.236        6.445
1             8.342        7.133        6.138        5.376
0             7.491        6.283        5.310        4.548

Segments(R,S)   R 3    S 4
b(s,r)
        s       3            2            1            0
r
3             7.810        7.019        6.448        6.080
2             6.445        5.653        5.112        4.743
1             5.376        4.614        4.053        3.696
0             4.548        3.786        3.236        2.880

Segments(R,S)   R 3    S 5
b(s,r)
        s       3            2            1            0
r
3             6.080        5.711        5.546        5.564
2             4.743        4.375        4.213        4.232
1             3.696        3.340        3.178        3.188
0             2.880        2.523        2.362        2.372
```

Table III, Page 6

```
Segments(R,S)  R 3   S 6
b(s,r)
        s      3              2              1              0
r
3            5.564          5.583          5.789          6.205
2            4.232          4.250          4.427          4.844
1            3.188          3.198          3.399          3.781
0            2.372          2.382          2.569          2.951

Segments(R,S)  R 3   S 7
b(s,r)
        s      3              2              1              0
r
3            6.205          6.622          7.248          8.121
2            4.844          5.261          5.814          6.687
1            3.781          4.164          4.776          5.574
0            2.951          3.334          3.911          4.709

Segments(R,S)  R 3   S 8
b(s,r)
        s      3              2              1              0
r
3            8.121          8.994         10.113         11.556
2            6.687          7.560          8.536          9.979
1            5.574          6.372          7.464          8.765
0            4.709          5.508          6.526          7.826

Segments(R,S)  R 3   S 9
b(s,r)
        s      3              2              1              0
r
3           11.556         12.999         14.763         17.008
2            9.979         11.422         12.935         15.181
1            8.765         10.065         11.786         13.781
0            7.826          9.127         10.707         12.702

Segments(R,S)  R 3   S10
b(s,r)
        s      3              2              1              0
r
3           17.008         19.254         21.952         25.529
2           15.181         17.427         19.657         23.234
1           13.781         15.776         18.424         21.515
0           12.702         14.697         17.097         20.187
```

Table III, Page 7

```
Segments(R,S)   R 4    S 1
b(s,r)
        s       3               2               1               0
r
3           18.096          15.615          13.602          11.871
2           17.064          14.583          12.718          10.987
1           16.246          13.917          11.986          10.333
0           15.779          13.450          11.553           9.900

Segments(R,S)   R 4    S 2
b(s,r)
        s       3               2               1               0
r
3           11.871          10.140           8.700           7.491
2           10.987           9.256           7.850           6.641
1           10.333           8.680           7.247           6.067
0            9.900           8.247           6.852           5.672

Segments(R,S)   R 4    S 3
b(s,r)
        s       3               2               1               0
r
3            7.491           6.283           5.310           4.548
2            6.641           5.433           4.481           3.720
1            6.067           4.887           3.891           3.131
0            5.672           4.491           3.524           2.764

Segments(R,S)   R 4    S 4
b(s,r)
        s       3               2               1               0
r
3            4.548           3.786           3.236           2.880
2            3.720           2.958           2.419           2.063
1            3.131           2.371           1.835           1.477
0            2.764           2.004           1.453           1.095

Segments(R,S)   R 4    S 5
b(s,r)
        s       3               2               1               0
r
3            2.880           2.523           2.362           2.372
2            2.063           1.706           1.546           1.556
1            1.477           1.119           0.964           0.969
0            1.095           0.737           0.575           0.579
```

Table III, Page 8

Segments(R,S)  R 4    S 6
b(s,.r)

| s | 3 | 2 | 1 | 0 |
|---|---|---|---|---|
| r |  |  |  |  |
| 3 | 2.372 | 2.382 | 2.569 | 2.951 |
| 2 | 1.556 | 1.566 | 1.739 | 2.121 |
| 1 | 0.969 | 0.973 | 1.155 | 1.525 |
| 0 | 0.579 | 0.584 | 0.762 | 1.131 |

Segments(R,S)  R 4    S 7
b(s,r)

| s | 3 | 2 | 1 | 0 |
|---|---|---|---|---|
| r |  |  |  |  |
| 3 | 2.951 | 3.334 | 3.911 | 4.709 |
| 2 | 2.121 | 2.504 | 3.046 | 3.844 |
| 1 | 1.525 | 1.894 | 2.461 | 3.228 |
| 0 | 1.131 | 1.501 | 2.059 | 2.826 |

Segments(R,S)  R 4    S 8
b(s,r)

| s | 3 | 2 | 1 | 0 |
|---|---|---|---|---|
| r |  |  |  |  |
| 3 | 4.709 | 5.508 | 6.526 | 7.826 |
| 2 | 3.844 | 4.643 | 5.587 | 6.887 |
| 1 | 3.228 | 3.995 | 4.992 | 6.225 |
| 0 | 2.826 | 3.593 | 4.566 | 5.799 |

Segments(R,S)  R 4    S 9
b(s,r)

| s | 3 | 2 | 1 | 0 |
|---|---|---|---|---|
| r |  |  |  |  |
| 3 | 7.826 | 9.127 | 10.707 | 12.702 |
| 2 | 6.887 | 8.188 | 9.628 | 11.623 |
| 1 | 6.225 | 7.457 | 9.003 | 10.867 |
| 0 | 5.799 | 7.031 | 8.520 | 10.384 |

Segments(R,S)  R 4   S10
b(s,r)

| s | 3 | 2 | 1 | 0 |
|---|---|---|---|---|
| r |  |  |  |  |
| 3 | 12.702 | 14.697 | 17.097 | 20.187 |
| 2 | 11.623 | 13.618 | 15.769 | 18.860 |
| 1 | 10.867 | 12.732 | 15.078 | 17.933 |
| 0 | 10.384 | 12.249 | 14.483 | 17.338 |

Segments(R,S)   R 5    S 1
b(s,r)

| s | 3 | 2 | 1 | 0 |
|---|---|---|---|---|
| r | | | | |
| 3 | 15.779 | 13.450 | 11.553 | 9.900 |
| 2 | 15.312 | 12.983 | 11.120 | 9.467 |
| 1 | 15.179 | 12.753 | 10.975 | 9.284 |
| 0 | 15.609 | 13.184 | 11.235 | 9.545 |

Segments(R,S)   R 5    S 2
b(s,r)

| s | 3 | 2 | 1 | 0 |
|---|---|---|---|---|
| r | | | | |
| 3 | 9.900 | 8.247 | 6.852 | 5.672 |
| 2 | 9.467 | 7.814 | 6.457 | 5.277 |
| 1 | 9.284 | 7.594 | 6.271 | 5.074 |
| 0 | 9.545 | 7.854 | 6.438 | 5.241 |

Segments(R,S)   R 5    S 3
b(s,r)

| s | 3 | 2 | 1 | 0 |
|---|---|---|---|---|
| r | | | | |
| 3 | 5.672 | 4.491 | 3.524 | 2.764 |
| 2 | 5.277 | 4.096 | 3.157 | 2.396 |
| 1 | 5.074 | 3.877 | 2.967 | 2.194 |
| 0 | 5.241 | 4.043 | 3.069 | 2.295 |

Segments(R,S)   R 5    S 4
b(s,r)

| s | 3 | 2 | 1 | 0 |
|---|---|---|---|---|
| r | | | | |
| 3 | 2.764 | 2.004 | 1.453 | 1.095 |
| 2 | 2.396 | 1.636 | 1.072 | 0.714 |
| 1 | 2.194 | 1.420 | 0.901 | 0.521 |
| 0 | 2.295 | 1.522 | 0.950 | 0.569 |

Segments(R,S)   R 5    S 5
b(s,r)

| s | 3 | 2 | 1 | 0 |
|---|---|---|---|---|
| r | | | | |
| 3 | 1.095 | 0.737 | 0.575 | 0.579 |
| 2 | 0.714 | 0.356 | 0.186 | 0.190 |
| 1 | 0.521 | 0.141 | 0.000 | 0.000 |
| 0 | 0.569 | 0.189 | 0.000 | 0.000 |

Table III, Page 10

Segments(R,S)   R 5   S 6
b(s,r)

| s | 3 | 2 | 1 | 0 |
|---|---|---|---|---|
| r | | | | |
| 3 | 0.579 | 0.584 | 0.762 | 1.131 |
| 2 | 0.190 | 0.195 | 0.368 | 0.738 |
| 1 | 0.000 | 0.000 | 0.169 | 0.544 |
| 0 | 0.000 | 0.000 | 0.186 | 0.561 |

Segments(R,S)   R 5   S 7
b(s,r)

| s | 3 | 2 | 1 | 0 |
|---|---|---|---|---|
| r | | | | |
| 3 | 1.131 | 1.501 | 2.059 | 2.826 |
| 2 | 0.738 | 1.108 | 1.657 | 2.424 |
| 1 | 0.544 | 0.919 | 1.466 | 2.235 |
| 0 | 0.561 | 0.936 | 1.500 | 2.269 |

Segments(R,S)   R 5   S 8
b(s,r)

| s | 3 | 2 | 1 | 0 |
|---|---|---|---|---|
| r | | | | |
| 3 | 2.826 | 3.593 | 4.566 | 5.799 |
| 2 | 2.424 | 3.191 | 4.140 | 5.372 |
| 1 | 2.235 | 3.004 | 3.960 | 5.182 |
| 0 | 2.269 | 3.038 | 4.010 | 5.232 |

Segments(R,S)   R 5   S 9
b(s,r)

| s | 3 | 2 | 1 | 0 |
|---|---|---|---|---|
| r | | | | |
| 3 | 5.799 | 7.031 | 8.520 | 10.384 |
| 2 | 5.372 | 6.605 | 8.037 | 9.901 |
| 1 | 5.182 | 6.404 | 7.864 | 9.691 |
| 0 | 5.232 | 6.454 | 7.923 | 9.751 |

Segments(R,S)   R 5   S10
b(s,r)

| s | 3 | 2 | 1 | 0 |
|---|---|---|---|---|
| r | | | | |
| 3 | 10.384 | 12.249 | 14.483 | 17.338 |
| 2 | 9.901 | 11.766 | 13.888 | 16.743 |
| 1 | 9.691 | 11.519 | 13.702 | 16.479 |
| 0 | 9.751 | 11.578 | 13.758 | 16.536 |

Table III, Page 11

Segments(R,S)   R 6     S 1
b(s,r)

| s | 3 | 2 | 1 | 0 |
|---|---|---|---|---|
| r | | | | |
| 3 | 15.609 | 13.184 | 11.235 | 9.545 |
| 2 | 16.039 | 13.614 | 11.495 | 9.805 |
| 1 | 17.160 | 14.241 | 12.556 | 10.614 |
| 0 | 19.011 | 16.092 | 13.832 | 11.890 |

Segments(R,S)   R 6     S 2
b(s,r)

| s | 3 | 2 | 1 | 0 |
|---|---|---|---|---|
| r | | | | |
| 3 | 9.545 | 7.854 | 6.438 | 5.241 |
| 2 | 9.805 | 8.114 | 6.604 | 5.407 |
| 1 | 10.614 | 8.672 | 7.411 | 6.049 |
| 0 | 11.890 | 9.948 | 8.346 | 6.984 |

Segments(R,S)   R 6     S 3
b(s,r)

| s | 3 | 2 | 1 | 0 |
|---|---|---|---|---|
| r | | | | |
| 3 | 5.241 | 4.043 | 3.069 | 2.295 |
| 2 | 5.407 | 4.210 | 3.170 | 2.396 |
| 1 | 6.049 | 4.686 | 3.835 | 2.919 |
| 0 | 6.984 | 5.621 | 4.496 | 3.580 |

Segments(R,S)   R 6     S 4
b(s,r)

| s | 3 | 2 | 1 | 0 |
|---|---|---|---|---|
| r | | | | |
| 3 | 2.295 | 1.522 | 0.950 | 0.569 |
| 2 | 2.396 | 1.623 | 0.998 | 0.617 |
| 1 | 2.919 | 2.003 | 1.453 | 0.962 |
| 0 | 3.580 | 2.664 | 1.964 | 1.473 |

Segments(R,S)   R 6     S 5
b(s,r)

| s | 3 | 2 | 1 | 0 |
|---|---|---|---|---|
| r | | | | |
| 3 | 0.569 | 0.189 | 0.000 | 0.000 |
| 2 | 0.617 | 0.237 | 0.000 | 0.000 |
| 1 | 0.962 | 0.470 | 0.239 | 0.223 |
| 0 | 1.473 | 0.981 | 0.698 | 0.683 |

Table III, Page 12

```
Segments(R,S)   R 6    S 6
b(s,r)
        s       3             2             1             0
r
3            0.000         0.000         0.186         0.561
2            0.000         0.000         0.203         0.578
1            0.223         0.208         0.407         0.796
0            0.683         0.668         0.859         1.248

Segments(R,S)   R 6    S 7
b(s,r)
        s       3             2             1             0
r
3            0.561         0.936         1.500         2.269
2            0.578         0.953         1.534         2.303
1            0.796         1.186         1.757         2.552
0            1.248         1.638         2.223         3.019

Segments(R,S)   R 6    S 8
b(s,r)
        s       3             2             1             0
r
3            2.269         3.038         4.010         5.232
2            2.303         3.072         4.060         5.282
1            2.552         3.348         4.310         5.563
0            3.019         3.815         4.818         6.071

Segments(R,S)   R 6    S 9
b(s,r)
        s       3             2             1             0
r
3            5.232         6.454         7.923         9.751
2            5.282         6.504         7.982         9.810
1            5.563         6.815         8.258        10.119
0            6.071         7.324         8.824        10.684

Segments(R,S)   R 6    S10
b(s,r)
        s       3             2             1             0
r
3            9.751        11.578        13.758        16.536
2            9.810        11.638        13.815        16.592
1           10.119        11.980        14.108        16.934
0           10.684        12.545        14.758        17.584
```

Table III, Page 13

```
Segments(R,S)   R 7    S 1
b(s,r)
            s       3               2               1               0
   r
   3          19.011          16.092          13.832          11.890
   2          20.862          17.942          15.107          13.165
   1          23.449          19.053          17.471          14.851
   0          27.095          22.699          19.555          16.935

Segments(R,S)   R 7    S 2
b(s,r)
            s       3               2               1               0
   r
   3          11.890           9.948           8.346           6.984
   2          13.165          11.223           9.281           7.919
   1          14.851          12.230          10.770           9.041
   0          16.935          14.315          12.256          10.527

Segments(R,S)   R 7    S 3
b(s,r)
            s       3               2               1               0
   r
   3           6.984           5.621           4.496           3.580
   2           7.919           6.556           5.157           4.241
   1           9.041           7.312           6.233           5.115
   0          10.527           8.798           7.411           6.294

Segments(R,S)   R 7    S 4
b(s,r)
            s       3               2               1               0
   r
   3           3.580           2.664           1.964           1.473
   2           4.241           3.325           2.475           1.983
   1           5.115           3.998           3.303           2.720
   0           6.294           5.176           4.331           3.748

Segments(R,S)   R 7    S 5
b(s,r)
            s       3               2               1               0
   r
   3           1.473           0.981           0.698           0.683
   2           1.983           1.492           1.158           1.142
   1           2.720           2.138           1.871           1.837
   0           3.748           3.165           2.846           2.812
```

Table III, Page 14

Segments(R,S)   R 7   S 6
b(s,r)

| s | 3 | 2 | 1 | 0 |
|---|---|---|---|---|
| r | | | | |
| 3 | 0.683 | 0.668 | 0.859 | 1.248 |
| 2 | 1.142 | 1.127 | 1.311 | 1.700 |
| 1 | 1.837 | 1.803 | 1.993 | 2.385 |
| 0 | 2.812 | 2.778 | 2.957 | 3.349 |

Segments(R,S)   R 7   S 7
b(s,r)

| s | 3 | 2 | 1 | 0 |
|---|---|---|---|---|
| r | | | | |
| 3 | 1.248 | 1.638 | 2.223 | 3.019 |
| 2 | 1.700 | 2.089 | 2.690 | 3.486 |
| 1 | 2.385 | 2.777 | 3.361 | 4.186 |
| 0 | 3.349 | 3.741 | 4.345 | 5.170 |

Segments(R,S)   R 7   S 8
b(s,r)

| s | 3 | 2 | 1 | 0 |
|---|---|---|---|---|
| r | | | | |
| 3 | 3.019 | 3.815 | 4.818 | 6.071 |
| 2 | 3.486 | 4.282 | 5.327 | 6.579 |
| 1 | 4.186 | 5.011 | 6.000 | 7.311 |
| 0 | 5.170 | 5.995 | 7.040 | 8.351 |

Segments(R,S)   R 7   S 9
b(s,r)

| s | 3 | 2 | 1 | 0 |
|---|---|---|---|---|
| r | | | | |
| 3 | 6.071 | 7.324 | 8.824 | 10.684 |
| 2 | 6.579 | 7.832 | 9.389 | 11.249 |
| 1 | 7.311 | 8.623 | 10.095 | 12.059 |
| 0 | 8.351 | 9.663 | 11.237 | 13.200 |

Segments(R,S)   R 7   S10
b(s,r)

| s | 3 | 2 | 1 | 0 |
|---|---|---|---|---|
| r | | | | |
| 3 | 10.684 | 12.545 | 14.758 | 17.584 |
| 2 | 11.249 | 13.110 | 15.407 | 18.234 |
| 1 | 12.059 | 14.022 | 16.158 | 19.187 |
| 0 | 13.200 | 15.164 | 17.506 | 20.536 |

Table III, Page 15

```
Segments(R,S)   R 8    S 1
b(s,r)
        s        3                 2               1               0
r
3            27.095            22.699          19.555          16.935
2            30.741            26.345          21.639          19.019
1            24.902             3.951          25.550          21.545
0            46.937            25.982          29.364          25.359

Segments(R,S)   R 8    S 2
b(s,r)
        s        3                 2               1               0
r
3            16.935            14.315          12.256          10.527
2            19.019            16.399          13.742          12.013
1            21.545            17.541          16.126          13.840
0            25.359            21.354          18.583          16.297

Segments(R,S)   R 8    S 3
b(s,r)
        s        3                 2               1               0
r
3            10.527             8.798           7.411           6.294
2            12.013            10.284           8.590           7.472
1            13.840            11.554          10.332           8.951
0            16.297            14.012          12.271          10.889

Segments(R,S)   R 8    S 4
b(s,r)
        s        3                 2               1               0
r
3             6.294             5.176           4.331           3.748
2             7.472             6.355           5.358           4.776
1             8.951             7.569           6.785           6.089
0            10.889             9.508           8.496           7.800

Segments(R,S)   R 8    S 5
b(s,r)
        s        3                 2               1               0
r
3             3.748             3.165           2.846           2.812
2             4.776             4.193           3.820           3.786
1             6.089             5.393           5.099           5.038
0             7.800             7.104           6.725           6.664
```

Table III, Page 16

Segments(R,S)   R 8    S 6
b(s,r)

| s | 3 | 2 | 1 | 0 |
|---|---|---|---|---|
| r | | | | |
| 3 | 2.812 | 2.778 | 2.957 | 3.349 |
| 2 | 3.786 | 3.752 | 3.921 | 4.313 |
| 1 | 5.038 | 4.977 | 5.157 | 5.554 |
| 0 | 6.664 | 6.603 | 6.769 | 7.167 |

Segments(R,S)   R 8    S 7
b(s,r)

| s | 3 | 2 | 1 | 0 |
|---|---|---|---|---|
| r | | | | |
| 3 | 3.349 | 3.741 | 4.345 | 5.170 |
| 2 | 4.313 | 4.706 | 5.329 | 6.154 |
| 1 | 5.554 | 5.952 | 6.545 | 7.419 |
| 0 | 7.167 | 7.564 | 8.192 | 9.066 |

Segments(R,S)   R 8    S 8
b(s,r)

| s | 3 | 2 | 1 | 0 |
|---|---|---|---|---|
| r | | | | |
| 3 | 5.170 | 5.995 | 7.040 | 8.351 |
| 2 | 6.154 | 6.979 | 8.080 | 9.391 |
| 1 | 7.419 | 8.293 | 9.310 | 10.728 |
| 0 | 9.066 | 9.940 | 11.057 | 12.475 |

Segments(R,S)   R 8    S 9
b(s,r)

| s | 3 | 2 | 1 | 0 |
|---|---|---|---|---|
| r | | | | |
| 3 | 8.351 | 9.663 | 11.237 | 13.200 |
| 2 | 9.391 | 10.702 | 12.378 | 14.341 |
| 1 | 10.728 | 12.146 | 13.649 | 15.819 |
| 0 | 12.475 | 13.894 | 15.606 | 17.776 |

Segments(R,S)   R 8    S10
b(s,r)

| s | 3 | 2 | 1 | 0 |
|---|---|---|---|---|
| r | | | | |
| 3 | 13.200 | 15.164 | 17.506 | 20.536 |
| 2 | 14.341 | 16.305 | 18.855 | 21.885 |
| 1 | 15.819 | 17.988 | 20.120 | 23.628 |
| 0 | 17.776 | 19.946 | 22.547 | 26.054 |

Table III, Page 17

```
Segments(R,S)   R 9    S 1
b(s,r)
        s       3              2              1              0
r
3           46.937         25.982         29.364         25.359
2           68.976         48.017         33.177         29.173
1            0.000          0.000          0.000          0.000
0            0.000          0.000          0.000          0.000

Segments(R,S)   R 9    S 2
b(s,r)
        s       3              2              1              0
r
3           25.359         21.354         18.583         16.297
2           29.173         25.168         21.041         18.755
1            0.000          0.000         25.410         21.686
0            0.000          0.000         30.180         26.456

Segments(R,S)   R 9    S 3
b(s,r)
        s       3              2              1              0
r
3           16.297         14.012         12.271         10.889
2           18.755         16.469         14.210         12.828
1           21.686         17.962         17.085         15.196
0           26.456         22.732         20.338         18.450

Segments(R,S)   R 9    S 4
b(s,r)
        s       3              2              1              0
r
3           10.889          9.508          8.496          7.800
2           12.828         11.447         10.207          9.511
1           15.196         13.308         12.507         11.606
0           18.450         16.561         15.255         14.354

Segments(R,S)   R 9    S 5
b(s,r)
        s       3              2              1              0
r
3            7.800          7.104          6.725          6.664
2            9.511          8.815          8.351          8.290
1           11.606         10.704         10.388         10.282
0           14.354         13.452         12.963         12.856
```

Table III, Page 18

Segments(R,S)  R 9   S 6
b(s,r)

| s | 3 | 2 | 1 | 0 |
|---|---|---|---|---|
| r | | | | |
| 3 | 6.664 | 6.603 | 6.769 | 7.167 |
| 2 | 8.290 | 8.229 | 8.381 | 8.779 |
| 1 | 10.282 | 10.175 | 10.346 | 10.755 |
| 0 | 12.856 | 12.750 | 12.895 | 13.304 |

Segments(R,S)  R 9   S 7
b(s,r)

| s | 3 | 2 | 1 | 0 |
|---|---|---|---|---|
| r | | | | |
| 3 | 7.167 | 7.564 | 8.192 | 9.066 |
| 2 | 8.779 | 9.177 | 9.839 | 10.713 |
| 1 | 10.755 | 11.164 | 11.770 | 12.731 |
| 0 | 13.304 | 13.714 | 14.384 | 15.346 |

Segments(R,S)  R 9   S 8
b(s,r)

| s | 3 | 2 | 1 | 0 |
|---|---|---|---|---|
| r | | | | |
| 3 | 9.066 | 9.940 | 11.057 | 12.475 |
| 2 | 10.713 | 11.587 | 12.804 | 14.223 |
| 1 | 12.731 | 13.693 | 14.738 | 16.366 |
| 0 | 15.346 | 16.307 | 17.555 | 19.183 |

Segments(R,S)  R 9   S 9
b(s,r)

| s | 3 | 2 | 1 | 0 |
|---|---|---|---|---|
| r | | | | |
| 3 | 12.475 | 13.894 | 15.606 | 17.776 |
| 2 | 14.223 | 15.641 | 17.564 | 19.734 |
| 1 | 16.366 | 17.993 | 19.495 | 22.138 |
| 0 | 19.183 | 20.810 | 22.801 | 25.445 |

Segments(R,S)  R 9   S10
b(s,r)

| s | 3 | 2 | 1 | 0 |
|---|---|---|---|---|
| r | | | | |
| 3 | 17.776 | 19.946 | 22.547 | 26.054 |
| 2 | 19.734 | 21.903 | 24.973 | 28.480 |
| 1 | 22.138 | 24.782 | 26.395 | 31.402 |
| 0 | 25.445 | 28.088 | 31.242 | 36.249 |

Table III, Page 19

Segments(R,S)   R10    S 1
b(s,r)

| s | 3 | 2 | 1 | 0 |
|---|---|---|---|---|
| r |  |  |  |  |
| 3 | 0.000 | 0.000 | 0.000 | 0.000 |
| 2 | 0.000 | 0.000 | 0.000 | 0.000 |
| 1 | 0.000 | 0.000 | 0.000 | 0.000 |
| 0 | 0.000 | 0.000 | 0.000 | 0.000 |

Segments(R,S)   R10    S 2
b(s,r)

| s | 3 | 2 | 1 | 0 |
|---|---|---|---|---|
| r |  |  |  |  |
| 3 | 0.000 | 0.000 | 30.180 | 26.456 |
| 2 | 0.000 | 0.000 | 34.950 | 31.226 |
| 1 | 0.000 | 0.000 | 0.000 | 0.000 |
| 0 | 0.000 | 0.000 | 0.000 | 0.000 |

Segments(R,S)   R10    S 3
b(s,r)

| s | 3 | 2 | 1 | 0 |
|---|---|---|---|---|
| r |  |  |  |  |
| 3 | 26.456 | 22.732 | 20.338 | 18.450 |
| 2 | 31.226 | 27.502 | 23.592 | 21.703 |
| 1 | 0.000 | 0.000 | 29.076 | 24.823 |
| 0 | 0.000 | 0.000 | 37.409 | 33.155 |

Segments(R,S)   R10    S 4
b(s,r)

| s | 3 | 2 | 1 | 0 |
|---|---|---|---|---|
| r |  |  |  |  |
| 3 | 18.450 | 16.561 | 15.255 | 14.354 |
| 2 | 21.703 | 19.814 | 18.003 | 17.102 |
| 1 | 24.823 | 20.569 | 21.827 | 20.331 |
| 0 | 33.155 | 28.901 | 26.933 | 25.436 |

Segments(R,S)   R10    S 5
b(s,r)

| s | 3 | 2 | 1 | 0 |
|---|---|---|---|---|
| r |  |  |  |  |
| 3 | 14.354 | 13.452 | 12.963 | 12.856 |
| 2 | 17.102 | 16.200 | 15.537 | 15.431 |
| 1 | 20.331 | 18.834 | 18.714 | 18.493 |
| 0 | 25.436 | 23.939 | 23.173 | 22.952 |

Table III, Page 20

```
Segments(R,S)  R10    S 6
b(s,r)
          s       3              2              1              0
r
3            12.856         12.750         12.895         13.304
2            15.431         15.324         15.445         15.854
1            18.493         18.272         18.453         18.888
0            22.952         22.731         22.828         23.262


Segments(R,S)  R10    S 7
b(s,r)
          s       3              2              1              0
r
3            13.304         13.714         14.384         15.346
2            15.854         16.263         16.999         17.960
1            18.888         19.323         19.879         21.059
0            23.262         23.697         24.466         25.645


Segments(R,S)  R10    S 8
b(s,r)
          s       3              2              1              0
r
3            15.346         16.307         17.555         19.183
2            17.960         18.922         20.372         22.000
1            21.059         22.238         23.011         25.264
0            25.645         26.825         28.396         30.648


Segments(R,S)  R10    S 9
b(s,r)
          s       3              2              1              0
r
3            19.183         20.810         22.801         25.445
2            22.000         23.627         26.108         28.751
1            25.264         27.516         26.529         31.654
0            30.648         32.901         35.531         40.656


Segments(R,S)  R10    S10
b(s,r)
          s       3              2              1              0
r
3            25.445         28.088         31.242         36.249
2            28.751         31.394         36.089         41.096
1            31.654         36.778          0.000          0.000
0            40.656         45.781          0.000          0.000
```

Table IV, Page 1


Coefficients of the bivariate polynomials according to
the Bezier method for the first embodiment

------------------------------------------------------------

F I R S T    L E N S    S U R F A C E


Segments(R,S)  R 1    S 1
b(s,r), wherein (s,r) are the indices of "b" according to Fig. 5

| r \ s | 3 | 2 | 1 | 0 |
|---|---|---|---|---|
| 3 | 0.000 | 0.000 | 0.000 | 0.000 |
| 2 | 0.000 | 0.000 | 0.000 | 0.000 |
| 1 | 0.000 | 0.000 | 0.000 | 0.000 |
| 0 | 0.000 | 0.000 | 0.000 | 0.000 |

Table IV, Page 2

Coefficients of the bivariate polynomials according to
the Bezier method for the first embodiment

------------------------------------------------------------

S E C O N D   L E N S   S U R F A C E

Segments(R,S)   R 1    S 1
b(s,r), wherein (s,r) are the indices of "b" according to Fig. 5

| s | 3 | 2 | 1 | 0 |
|---|---|---|---|---|
| r |   |   |   |   |
| 3 | -56.222 | -51.668 | -47.117 | -43.157 |
| 2 | -51.668 | -47.115 | -42.167 | -38.207 |
| 1 | -47.117 | -42.167 | -37.461 | -33.853 |
| 0 | -43.157 | -38.207 | -33.853 | -30.245 |

Segments(R,S)   R 1    S 2
b(s,r)

| s | 3 | 2 | 1 | 0 |
|---|---|---|---|---|
| r |   |   |   |   |
| 3 | -43.157 | -39.197 | -35.792 | -32.997 |
| 2 | -38.207 | -34.247 | -31.133 | -28.338 |
| 1 | -33.853 | -30.245 | -26.833 | -24.518 |
| 0 | -30.245 | -26.637 | -23.746 | -21.432 |

Segments(R,S)   R 1    S 3
b(s,r)

| s | 3 | 2 | 1 | 0 |
|---|---|---|---|---|
| r |   |   |   |   |
| 3 | -32.997 | -30.201 | -28.000 | -26.300 |
| 2 | -28.338 | -25.543 | -23.750 | -22.050 |
| 1 | -24.518 | -22.203 | -20.046 | -18.707 |
| 0 | -21.432 | -19.117 | -17.368 | -16.030 |

Segments(R,S)   R 1    S 4
b(s,r)

| s | 3 | 2 | 1 | 0 |
|---|---|---|---|---|
| r |   |   |   |   |
| 3 | -26.300 | -24.600 | -23.396 | -22.604 |
| 2 | -22.050 | -20.350 | -19.437 | -18.646 |
| 1 | -18.707 | -17.368 | -16.207 | -15.596 |
| 0 | -16.030 | -14.691 | -13.761 | -13.149 |

Segments(R,S)   R 1    S 5
b(s,r)

| s | 3 | 2 | 1 | 0 |
|---|---|---|---|---|
| r |   |   |   |   |
| 3 | -22.604 | -21.813 | -21.432 | -21.432 |
| 2 | -18.646 | -17.854 | -17.574 | -17.574 |
| 1 | -15.596 | -14.984 | -14.620 | -14.620 |
| 0 | -13.149 | -12.538 | -12.246 | -12.246 |

Table IV, Page 3

Segments(R,S)  R 1   S 6
b(s,r)

| s | 3 | 2 | 1 | 0 |
|---|---|---|---|---|
| r |   |   |   |   |
| 3 | -21.432 | -21.432 | -21.813 | -22.604 |
| 2 | -17.574 | -17.574 | -17.854 | -18.646 |
| 1 | -14.620 | -14.620 | -14.984 | -15.596 |
| 0 | -12.246 | -12.246 | -12.538 | -13.149 |

Segments(R,S)  R 1   S 7
b(s,r)

| s | 3 | 2 | 1 | 0 |
|---|---|---|---|---|
| r |   |   |   |   |
| 3 | -22.604 | -23.396 | -24.600 | -26.300 |
| 2 | -18.646 | -19.437 | -20.350 | -22.050 |
| 1 | -15.596 | -16.207 | -17.368 | -18.707 |
| 0 | -13.149 | -13.761 | -14.691 | -16.030 |

Segments(R,S)  R 1   S 8
b(s,r)

| s | 3 | 2 | 1 | 0 |
|---|---|---|---|---|
| r |   |   |   |   |
| 3 | -26.300 | -28.000 | -30.201 | -32.997 |
| 2 | -22.050 | -23.750 | -25.543 | -28.338 |
| 1 | -18.707 | -20.046 | -22.203 | -24.518 |
| 0 | -16.030 | -17.368 | -19.117 | -21.432 |

Segments(R,S)  R 1   S 9
b(s,r)

| s | 3 | 2 | 1 | 0 |
|---|---|---|---|---|
| r |   |   |   |   |
| 3 | -32.997 | -35.792 | -39.197 | -43.157 |
| 2 | -28.338 | -31.133 | -34.247 | -38.207 |
| 1 | -24.518 | -26.833 | -30.245 | -33.853 |
| 0 | -21.432 | -23.746 | -26.637 | -30.245 |

Segments(R,S)  R 1   S10
b(s,r)

| s | 3 | 2 | 1 | 0 |
|---|---|---|---|---|
| r |   |   |   |   |
| 3 | -43.157 | -47.117 | -51.668 | -56.222 |
| 2 | -38.207 | -42.167 | -47.115 | -51.668 |
| 1 | -33.853 | -37.461 | -42.167 | -47.117 |
| 0 | -30.245 | -33.853 | -38.207 | -43.157 |

Table IV, Page 4

```
Segments(R,S)   R 2    S 1
b(s,r)
        s       3                2                1                0
r
3          -43.157          -38.207          -33.853          -30.245
2          -39.197          -34.247          -30.245          -26.637
1          -35.792          -31.133          -26.833          -23.746
0          -32.997          -28.338          -24.518          -21.432

Segments(R,S)   R 2    S 2
b(s,r)
        s       3                2                1                0
r
3          -30.245          -26.637          -23.746          -21.432
2          -26.637          -23.029          -20.660          -18.346
1          -23.746          -20.660          -17.862          -15.972
0          -21.432          -18.346          -15.972          -14.081

Segments(R,S)   R 2    S 3
b(s,r)
        s       3                2                1                0
r
3          -21.432          -19.117          -17.368          -16.030
2          -18.346          -16.031          -14.691          -13.352
1          -15.972          -14.081          -12.413          -11.322
0          -14.081          -12.190          -10.777           -9.687

Segments(R,S)   R 2    S 4
b(s,r)
        s       3                2                1                0
r
3          -16.030          -14.691          -13.761          -13.149
2          -13.352          -12.013          -11.315          -10.703
1          -11.322          -10.232           -9.353           -8.845
0           -9.687           -8.596           -7.830           -7.322

Segments(R,S)   R 2    S 5
b(s,r)
        s       3                2                1                0
r
3          -13.149          -12.538          -12.246          -12.246
2          -10.703          -10.091           -9.871           -9.871
1           -8.845           -8.337           -8.062           -8.062
0           -7.322           -6.814           -6.567           -6.567
```

Table IV, Page 5

Segments(R,S)   R 2    S 6
b(s,r)

| s | 3 | 2 | 1 | 0 |
|---|---|---|---|---|
| r |  |  |  |  |
| 3 | -12.246 | -12.246 | -12.538 | -13.149 |
| 2 | -9.871 | -9.871 | -10.091 | -10.703 |
| 1 | -8.062 | -8.062 | -8.337 | -8.845 |
| 0 | -6.567 | -6.567 | -6.814 | -7.322 |

Segments(R,S)   R 2    S 7
b(s,r)

| s | 3 | 2 | 1 | 0 |
|---|---|---|---|---|
| r |  |  |  |  |
| 3 | -13.149 | -13.761 | -14.691 | -16.030 |
| 2 | -10.703 | -11.315 | -12.013 | -13.352 |
| 1 | -8.845 | -9.353 | -10.232 | -11.322 |
| 0 | -7.322 | -7.830 | -8.596 | -9.687 |

Segments(R,S)   R 2    S 8
b(s,r)

| s | 3 | 2 | 1 | 0 |
|---|---|---|---|---|
| r |  |  |  |  |
| 3 | -16.030 | -17.368 | -19.117 | -21.432 |
| 2 | -13.352 | -14.691 | -16.031 | -18.346 |
| 1 | -11.322 | -12.413 | -14.081 | -15.972 |
| 0 | -9.687 | -10.777 | -12.190 | -14.081 |

Segments(R,S)   R 2    S 9
b(s,r)

| s | 3 | 2 | 1 | 0 |
|---|---|---|---|---|
| r |  |  |  |  |
| 3 | -21.432 | -23.746 | -26.637 | -30.245 |
| 2 | -18.346 | -20.660 | -23.029 | -26.637 |
| 1 | -15.972 | -17.862 | -20.660 | -23.746 |
| 0 | -14.081 | -15.972 | -18.346 | -21.432 |

Segments(R,S)   R 2    S10
b(s,r)

| s | 3 | 2 | 1 | 0 |
|---|---|---|---|---|
| r |  |  |  |  |
| 3 | -30.245 | -33.853 | -38.207 | -43.157 |
| 2 | -26.637 | -30.245 | -34.247 | -39.197 |
| 1 | -23.746 | -26.833 | -31.133 | -35.792 |
| 0 | -21.432 | -24.518 | -28.338 | -32.997 |

Table IV, Page 6

```
Segments(R,S)   R 3    S 1
b(s,r)
        s       3              2              1              0
r
3          -32.997        -28.338        -24.518        -21.432
2          -30.201        -25.543        -22.203        -19.117
1          -28.000        -23.750        -20.046        -17.368
0          -26.300        -22.050        -18.707        -16.030

Segments(R,S)   R 3    S 2
b(s,r)
        s       3              2              1              0
r
3          -21.432        -18.346        -15.972        -14.081
2          -19.117        -16.031        -14.081        -12.190
1          -17.368        -14.691        -12.413        -10.777
0          -16.030        -13.352        -11.322         -9.687

Segments(R,S)   R 3    S 3
b(s,r)
        s       3              2              1              0
r
3          -14.081        -12.190        -10.777         -9.687
2          -12.190        -10.299         -9.141         -8.051
1          -10.777         -9.141         -7.788         -6.807
0           -9.687         -8.051         -6.807         -5.826

Segments(R,S)   R 3    S 4
b(s,r)
        s       3              2              1              0
r
3           -9.687         -8.596         -7.830         -7.322
2           -8.051         -6.960         -6.306         -5.798
1           -6.807         -5.826         -5.088         -4.609
0           -5.826         -4.845         -4.130         -3.652

Segments(R,S)   R 3    S 5
b(s,r)
        s       3              2              1              0
r
3           -7.322         -6.814         -6.567         -6.567
2           -5.798         -5.291         -5.072         -5.072
1           -4.609         -4.130         -3.892         -3.892
0           -3.652         -3.173         -2.933         -2.933
```

Table IV, Page 7

```
Segments(R,S)  R 3   S 6
b(s,r)
        s        3              2              1              0
r
3           -6.567         -6.567         -6.814         -7.322
2           -5.072         -5.072         -5.291         -5.798
1           -3.892         -3.892         -4.130         -4.609
0           -2.933         -2.933         -3.173         -3.652

Segments(R,S)  R 3   S 7
b(s,r)
        s        3              2              1              0
r
3           -7.322         -7.830         -8.596         -9.687
2           -5.798         -6.306         -6.960         -8.051
1           -4.609         -5.088         -5.826         -6.807
0           -3.652         -4.130         -4.845         -5.826

Segments(R,S)  R 3   S 8
b(s,r)
        s        3              2              1              0
r
3           -9.687        -10.777        -12.190        -14.081
2           -8.051         -9.141        -10.299        -12.190
1           -6.807         -7.788         -9.141        -10.777
0           -5.826         -6.807         -8.051         -9.687

Segments(R,S)  R 3   S 9
b(s,r)
        s        3              2              1              0
r
3          -14.081        -15.972        -18.346        -21.432
2          -12.190        -14.081        -16.031        -19.117
1          -10.777        -12.413        -14.691        -17.368
0           -9.687        -11.322        -13.352        -16.030

Segments(R,S)  R 3   S10
b(s,r)
        s        3              2              1              0
r
3          -21.432        -24.518        -28.338        -32.997
2          -19.117        -22.203        -25.543        -30.201
1          -17.368        -20.046        -23.750        -28.000
0          -16.030        -18.707        -22.050        -26.300
```

Table IV, Page 8

```
Segments(R,S)   R 4    S 1
b(s,r)
         s       3             2             1             0
r
3          -26.300       -22.050       -18.707       -16.030
2          -24.600       -20.350       -17.368       -14.691
1          -23.396       -19.437       -16.207       -13.761
0          -22.604       -18.646       -15.596       -13.149

Segments(R,S)   R 4    S 2
b(s,r)
         s       3             2             1             0
r
3          -16.030       -13.352       -11.322        -9.687
2          -14.691       -12.013       -10.232        -8.596
1          -13.761       -11.315        -9.353        -7.830
0          -13.149       -10.703        -8.845        -7.322

Segments(R,S)   R 4    S 3
b(s,r)
         s       3             2             1             0
r
3           -9.687        -8.051        -6.807        -5.826
2           -8.596        -6.960        -5.826        -4.845
1           -7.830        -6.306        -5.088        -4.130
0           -7.322        -5.798        -4.609        -3.652

Segments(R,S)   R 4    S 4
b(s,r)
         s       3             2             1             0
r
3           -5.826        -4.845        -4.130        -3.652
2           -4.845        -3.864        -3.173        -2.694
1           -4.130        -3.173        -2.461        -1.974
0           -3.652        -2.694        -1.974        -1.486

Segments(R,S)   R 4    S 5
b(s,r)
         s       3             2             1             0
r
3           -3.652        -3.173        -2.933        -2.933
2           -2.694        -2.215        -1.975        -1.975
1           -1.974        -1.486        -1.245        -1.245
0           -1.486        -0.999        -0.750        -0.750
```

Table IV, Page 9

```
Segments(R,S)   R 4    S 6
b(s,r)
         s      3              2              1              0
r
3           -2.933         -2.933         -3.173         -3.652
2           -1.975         -1.975         -2.215         -2.694
1           -1.245         -1.245         -1.486         -1.974
0           -0.750         -0.750         -0.999         -1.486

Segments(R,S)   R 4    S 7
b(s,r)
         s      3              2              1              0
r
3           -3.652         -4.130         -4.845         -5.826
2           -2.694         -3.173         -3.864         -4.845
1           -1.974         -2.461         -3.173         -4.130
0           -1.486         -1.974         -2.694         -3.652

Segments(R,S)   R 4    S 8
b(s,r)
         s      3              2              1              0
r
3           -5.826         -6.807         -8.051         -9.687
2           -4.845         -5.826         -6.960         -8.596
1           -4.130         -5.088         -6.306         -7.830
0           -3.652         -4.609         -5.798         -7.322

Segments(R,S)   R 4    S 9
b(s,r)
         s      3              2              1              0
r
3           -9.687        -11.322        -13.352        -16.030
2           -8.596        -10.232        -12.013        -14.691
1           -7.830         -9.353        -11.315        -13.761
0           -7.322         -8.845        -10.703        -13.149

Segments(R,S)   R 4    S10
b(s,r)
         s      3              2              1              0
r
3          -16.030        -18.707        -22.050        -26.300
2          -14.691        -17.368        -20.350        -24.600
1          -13.761        -16.207        -19.437        -23.396
0          -13.149        -15.596        -18.646        -22.604
```

Table IV, Page 10

Segments(R,S)  R 5   S 1
b(s,r)

| s | 3 | 2 | 1 | 0 |
|---|---|---|---|---|
| r | | | | |
| 3 | -22.604 | -18.646 | -15.596 | -13.149 |
| 2 | -21.813 | -17.854 | -14.984 | -12.538 |
| 1 | -21.432 | -17.574 | -14.620 | -12.246 |
| 0 | -21.432 | -17.574 | -14.620 | -12.246 |

Segments(R,S)  R 5   S 2
b(s,r)

| s | 3 | 2 | 1 | 0 |
|---|---|---|---|---|
| r | | | | |
| 3 | -13.149 | -10.703 | -8.845 | -7.322 |
| 2 | -12.538 | -10.091 | -8.337 | -6.814 |
| 1 | -12.246 | -9.871 | -8.062 | -6.567 |
| 0 | -12.246 | -9.871 | -8.062 | -6.567 |

Segments(R,S)  R 5   S 3
b(s,r)

| s | 3 | 2 | 1 | 0 |
|---|---|---|---|---|
| r | | | | |
| 3 | -7.322 | -5.798 | -4.609 | -3.652 |
| 2 | -6.814 | -5.291 | -4.130 | -3.173 |
| 1 | -6.567 | -5.072 | -3.892 | -2.933 |
| 0 | -6.567 | -5.072 | -3.892 | -2.933 |

Segments(R,S)  R 5   S 4
b(s,r)

| s | 3 | 2 | 1 | 0 |
|---|---|---|---|---|
| r | | | | |
| 3 | -3.652 | -2.694 | -1.974 | -1.486 |
| 2 | -3.173 | -2.215 | -1.486 | -0.999 |
| 1 | -2.933 | -1.975 | -1.245 | -0.750 |
| 0 | -2.933 | -1.975 | -1.245 | -0.750 |

Segments(R,S)  R 5   S 5
b(s,r)

| s | 3 | 2 | 1 | 0 |
|---|---|---|---|---|
| r | | | | |
| 3 | -1.486 | -0.999 | -0.750 | -0.750 |
| 2 | -0.999 | -0.512 | -0.255 | -0.255 |
| 1 | -0.750 | -0.255 | 0.000 | 0.000 |
| 0 | -0.750 | -0.255 | 0.000 | 0.000 |

Table IV, Page 11

Segments(R,S)  R 5   S 6

b(s,r)

| s | 3 | 2 | 1 | 0 |
|---|---|---|---|---|
| r | | | | |
| 3 | -0.750 | -0.750 | -0.999 | -1.486 |
| 2 | -0.255 | -0.255 | -0.512 | -0.999 |
| 1 | 0.000 | 0.000 | -0.255 | -0.750 |
| 0 | 0.000 | 0.000 | -0.255 | -0.750 |

Segments(R,S)  R 5   S 7

b(s,r)

| s | 3 | 2 | 1 | 0 |
|---|---|---|---|---|
| r | | | | |
| 3 | -1.486 | -1.974 | -2.694 | -3.652 |
| 2 | -0.999 | -1.486 | -2.215 | -3.173 |
| 1 | -0.750 | -1.245 | -1.975 | -2.933 |
| 0 | -0.750 | -1.245 | -1.975 | -2.933 |

Segments(R,S)  R 5   S 8

b(s,r)

| s | 3 | 2 | 1 | 0 |
|---|---|---|---|---|
| r | | | | |
| 3 | -3.652 | -4.609 | -5.798 | -7.322 |
| 2 | -3.173 | -4.130 | -5.291 | -6.814 |
| 1 | -2.933 | -3.892 | -5.072 | -6.567 |
| 0 | -2.933 | -3.892 | -5.072 | -6.567 |

Segments(R,S)  R 5   S 9

b(s,r)

| s | 3 | 2 | 1 | 0 |
|---|---|---|---|---|
| r | | | | |
| 3 | -7.322 | -8.845 | -10.703 | -13.149 |
| 2 | -6.814 | -8.337 | -10.091 | -12.538 |
| 1 | -6.567 | -8.062 | -9.871 | -12.246 |
| 0 | -6.567 | -8.062 | -9.871 | -12.246 |

Segments(R,S)  R 5   S10

b(s,r)

| s | 3 | 2 | 1 | 0 |
|---|---|---|---|---|
| r | | | | |
| 3 | -13.149 | -15.596 | -18.646 | -22.604 |
| 2 | -12.538 | -14.984 | -17.854 | -21.813 |
| 1 | -12.246 | -14.620 | -17.574 | -21.432 |
| 0 | -12.246 | -14.620 | -17.574 | -21.432 |

Table IV, Page 12

```
Segments(R,S)   R 6    S 1
b(s,r)
        s       3              2              1              0
r
3           -21.432        -17.574        -14.620        -12.246
2           -21.432        -17.574        -14.620        -12.246
1           -21.813        -17.854        -14.984        -12.538
0           -22.604        -18.646        -15.596        -13.149

Segments(R,S)   R 6    S 2
b(s,r)
        s       3              2              1              0
r
3           -12.246         -9.871         -8.062         -6.567
2           -12.246         -9.871         -8.062         -6.567
1           -12.538        -10.091         -8.337         -6.814
0           -13.149        -10.703         -8.845         -7.322

Segments(R,S)   R 6    S 3
b(s,r)
        s       3              2              1              0
r
3            -6.567         -5.072         -3.892         -2.933
2            -6.567         -5.072         -3.892         -2.933
1            -6.814         -5.291         -4.130         -3.173
0            -7.322         -5.798         -4.609         -3.652

Segments(R,S)   R 6    S 4
b(s,r)
        s       3              2              1              0
r
3            -2.933         -1.975         -1.245         -0.750
2            -2.933         -1.975         -1.245         -0.750
1            -3.173         -2.215         -1.486         -0.999
0            -3.652         -2.694         -1.974         -1.486

Segments(R,S)   R 6    S 5
b(s,r)
        s       3              2              1              0
r
3            -0.750         -0.255          0.000          0.000
2            -0.750         -0.255          0.000          0.000
1            -0.999         -0.512         -0.255         -0.255
0            -1.486         -0.999         -0.750         -0.750
```

Table IV, Page 13

Segments(R,S)  R 6    S 6
b(s,r)

| s | 3 | 2 | 1 | 0 |
|---|---|---|---|---|
| r |  |  |  |  |
| 3 | 0.000 | 0.000 | -0.255 | -0.750 |
| 2 | 0.000 | 0.000 | -0.255 | -0.750 |
| 1 | -0.255 | -0.255 | -0.512 | -0.999 |
| 0 | -0.750 | -0.750 | -0.999 | -1.486 |

Segments(R,S)  R 6    S 7
b(s,r)

| s | 3 | 2 | 1 | 0 |
|---|---|---|---|---|
| r |  |  |  |  |
| 3 | -0.750 | -1.245 | -1.975 | -2.933 |
| 2 | -0.750 | -1.245 | -1.975 | -2.933 |
| 1 | -0.999 | -1.486 | -2.215 | -3.173 |
| 0 | -1.486 | -1.974 | -2.694 | -3.652 |

Segments(R,S)  R 6    S 8
b(s,r)

| s | 3 | 2 | 1 | 0 |
|---|---|---|---|---|
| r |  |  |  |  |
| 3 | -2.933 | -3.892 | -5.072 | -6.567 |
| 2 | -2.933 | -3.892 | -5.072 | -6.567 |
| 1 | -3.173 | -4.130 | -5.291 | -6.814 |
| 0 | -3.652 | -4.609 | -5.798 | -7.322 |

Segments(R,S)  R 6    S 9
b(s,r)

| s | 3 | 2 | 1 | 0 |
|---|---|---|---|---|
| r |  |  |  |  |
| 3 | -6.567 | -8.062 | -9.871 | -12.246 |
| 2 | -6.567 | -8.062 | -9.871 | -12.246 |
| 1 | -6.814 | -8.337 | -10.091 | -12.538 |
| 0 | -7.322 | -8.845 | -10.703 | -13.149 |

Segments(R,S)  R 6    S10
b(s,r)

| s | 3 | 2 | 1 | 0 |
|---|---|---|---|---|
| r |  |  |  |  |
| 3 | -12.246 | -14.620 | -17.574 | -21.432 |
| 2 | -12.246 | -14.620 | -17.574 | -21.432 |
| 1 | -12.538 | -14.984 | -17.854 | -21.813 |
| 0 | -13.149 | -15.596 | -18.646 | -22.604 |

Table IV, Page 14

Segments(R,S)  R 7  S 1
b(s,r)

| s | 3 | 2 | 1 | 0 |
|---|---|---|---|---|
| r |  |  |  |  |
| 3 | -22.604 | -18.646 | -15.596 | -13.149 |
| 2 | -23.396 | -19.437 | -16.207 | -13.761 |
| 1 | -24.600 | -20.350 | -17.368 | -14.691 |
| 0 | -26.300 | -22.050 | -18.707 | -16.030 |

Segments(R,S)  R 7  S 2
b(s,r)

| s | 3 | 2 | 1 | 0 |
|---|---|---|---|---|
| r |  |  |  |  |
| 3 | -13.149 | -10.703 | -8.845 | -7.322 |
| 2 | -13.761 | -11.315 | -9.353 | -7.830 |
| 1 | -14.691 | -12.013 | -10.232 | -8.596 |
| 0 | -16.030 | -13.352 | -11.322 | -9.687 |

Segments(R,S)  R 7  S 3
b(s,r)

| s | 3 | 2 | 1 | 0 |
|---|---|---|---|---|
| r |  |  |  |  |
| 3 | -7.322 | -5.798 | -4.609 | -3.652 |
| 2 | -7.830 | -6.306 | -5.088 | -4.130 |
| 1 | -8.596 | -6.960 | -5.826 | -4.845 |
| 0 | -9.687 | -8.051 | -6.807 | -5.826 |

Segments(R,S)  R 7  S 4
b(s,r)

| s | 3 | 2 | 1 | 0 |
|---|---|---|---|---|
| r |  |  |  |  |
| 3 | -3.652 | -2.694 | -1.974 | -1.486 |
| 2 | -4.130 | -3.173 | -2.461 | -1.974 |
| 1 | -4.845 | -3.864 | -3.173 | -2.694 |
| 0 | -5.826 | -4.845 | -4.130 | -3.652 |

Segments(R,S)  R 7  S 5
b(s,r)

| s | 3 | 2 | 1 | 0 |
|---|---|---|---|---|
| r |  |  |  |  |
| 3 | -1.486 | -0.999 | -0.750 | -0.750 |
| 2 | -1.974 | -1.486 | -1.245 | -1.245 |
| 1 | -2.694 | -2.215 | -1.975 | -1.975 |
| 0 | -3.652 | -3.173 | -2.933 | -2.933 |

Table IV, Page 15

```
Segments(R,S)   R 7    S 6
b(s,r)
        s       3              2              1              0
r
3           -0.750         -0.750         -0.999         -1.486
2           -1.245         -1.245         -1.486         -1.974
1           -1.975         -1.975         -2.215         -2.694
0           -2.933         -2.933         -3.173         -3.652

Segments(R,S)   R 7    S 7
b(s,r)
        s       3              2              1              0
r
3           -1.486         -1.974         -2.694         -3.652
2           -1.974         -2.461         -3.173         -4.130
1           -2.694         -3.173         -3.864         -4.845
0           -3.652         -4.130         -4.845         -5.826

Segments(R,S)   R 7    S 8
b(s,r)
        s       3              2              1              0
r
3           -3.652         -4.609         -5.798         -7.322
2           -4.130         -5.088         -6.306         -7.830
1           -4.845         -5.826         -6.960         -8.596
0           -5.826         -6.807         -8.051         -9.687

Segments(R,S)   R 7    S 9
b(s,r)
        s       3              2              1              0
r
3           -7.322         -8.845        -10.703        -13.149
2           -7.830         -9.353        -11.315        -13.761
1           -8.596        -10.232        -12.013        -14.691
0           -9.687        -11.322        -13.352        -16.030

Segments(R,S)   R 7    S10
b(s,r)
        s       3              2              1              0
r
3          -13.149        -15.596        -18.646        -22.604
2          -13.761        -16.207        -19.437        -23.396
1          -14.691        -17.368        -20.350        -24.600
0          -16.030        -18.707        -22.050        -26.300
```

Table IV, Page 16

```
Segments(R,S)   R 8    S 1
b(s,r)
        s     3              2              1              0
r
3        -26.300        -22.050        -18.707        -16.030
2        -28.000        -23.750        -20.046        -17.368
1        -30.201        -25.543        -22.203        -19.117
0        -32.997        -28.338        -24.518        -21.432

Segments(R,S)   R 8    S 2
b(s,r)
        s     3              2              1              0
r
3        -16.030        -13.352        -11.322         -9.687
2        -17.368        -14.691        -12.413        -10.777
1        -19.117        -16.031        -14.081        -12.190
0        -21.432        -18.346        -15.972        -14.081

Segments(R,S)   R 8    S 3
b(s,r)
        s     3              2              1              0
r
3         -9.687         -8.051         -6.807         -5.826
2        -10.777         -9.141         -7.788         -6.807
1        -12.190        -10.299         -9.141         -8.051
0        -14.081        -12.190        -10.777         -9.687

Segments(R,S)   R 8    S 4
b(s,r)
        s     3              2              1              0
r
3         -5.826         -4.845         -4.130         -3.652
2         -6.807         -5.826         -5.088         -4.609
1         -8.051         -6.960         -6.306         -5.798
0         -9.687         -8.596         -7.830         -7.322

Segments(R,S)   R 8    S 5
b(s,r)
        s     3              2              1              0
r
3         -3.652         -3.173         -2.933         -2.933
2         -4.609         -4.130         -3.892         -3.892
1         -5.798         -5.291         -5.072         -5.072
0         -7.322         -6.814         -6.567         -6.567
```

Table IV, Page 17

Segments(R,S)  R 8   S 6
b(s,r)

| s | 3 | 2 | 1 | 0 |
|---|---|---|---|---|
| r |  |  |  |  |
| 3 | −2.933 | −2.933 | −3.173 | −3.652 |
| 2 | −3.892 | −3.892 | −4.130 | −4.609 |
| 1 | −5.072 | −5.072 | −5.291 | −5.798 |
| 0 | −6.567 | −6.567 | −6.814 | −7.322 |

Segments(R,S)  R 8   S 7
b(s,r)

| s | 3 | 2 | 1 | 0 |
|---|---|---|---|---|
| r |  |  |  |  |
| 3 | −3.652 | −4.130 | −4.845 | −5.826 |
| 2 | −4.609 | −5.088 | −5.826 | −6.807 |
| 1 | −5.798 | −6.306 | −6.960 | −8.051 |
| 0 | −7.322 | −7.830 | −8.596 | −9.687 |

Segments(R,S)  R 8   S 8
b(s,r)

| s | 3 | 2 | 1 | 0 |
|---|---|---|---|---|
| r |  |  |  |  |
| 3 | −5.826 | −6.807 | −8.051 | −9.687 |
| 2 | −6.807 | −7.788 | −9.141 | −10.777 |
| 1 | −8.051 | −9.141 | −10.299 | −12.190 |
| 0 | −9.687 | −10.777 | −12.190 | −14.081 |

Segments(R,S)  R 8   S 9
b(s,r)

| s | 3 | 2 | 1 | 0 |
|---|---|---|---|---|
| r |  |  |  |  |
| 3 | −9.687 | −11.322 | −13.352 | −16.030 |
| 2 | −10.777 | −12.413 | −14.691 | −17.368 |
| 1 | −12.190 | −14.081 | −16.031 | −19.117 |
| 0 | −14.081 | −15.972 | −18.346 | −21.432 |

Segments(R,S)  R 8   S10
b(s,r)

| s | 3 | 2 | 1 | 0 |
|---|---|---|---|---|
| r |  |  |  |  |
| 3 | −16.030 | −18.707 | −22.050 | −26.300 |
| 2 | −17.368 | −20.046 | −23.750 | −28.000 |
| 1 | −19.117 | −22.203 | −25.543 | −30.201 |
| 0 | −21.432 | −24.518 | −28.338 | −32.997 |

Table IV, Page 18

```
Segments(R,S)  R 9   S 1
b(s,r)
        s     3              2              1              0
r
3         -32.997        -28.338        -24.518        -21.432
2         -35.792        -31.133        -26.833        -23.746
1         -39.197        -34.247        -30.245        -26.637
0         -43.157        -38.207        -33.853        -30.245

Segments(R,S)  R 9   S 2
b(s,r)
        s     3              2              1              0
r
3         -21.432        -18.346        -15.972        -14.081
2         -23.746        -20.660        -17.862        -15.972
1         -26.637        -23.029        -20.660        -18.346
0         -30.245        -26.637        -23.746        -21.432

Segments(R,S)  R 9   S 3
b(s,r)
        s     3              2              1              0
r
3         -14.081        -12.190        -10.777         -9.687
2         -15.972        -14.081        -12.413        -11.322
1         -18.346        -16.031        -14.691        -13.352
0         -21.432        -19.117        -17.368        -16.030

Segments(R,S)  R 9   S 4
b(s,r)
        s     3              2              1              0
r
3          -9.687         -8.596         -7.830         -7.322
2         -11.322        -10.232         -9.353         -8.845
1         -13.352        -12.013        -11.315        -10.703
0         -16.030        -14.691        -13.761        -13.149

Segments(R,S)  R 9   S 5
b(s,r)
        s     3              2              1              0
r
3          -7.322         -6.814         -6.567         -6.567
2          -8.845         -8.337         -8.062         -8.062
1         -10.703        -10.091         -9.871         -9.871
0         -13.149        -12.538        -12.246        -12.246
```

Table IV, Page 19

Segments(R,S)   R 9   S 6
b(s,r)

| s | 3 | 2 | 1 | 0 |
|---|---|---|---|---|
| r | | | | |
| 3 | -6.567 | -6.567 | -6.814 | -7.322 |
| 2 | -8.062 | -8.062 | -8.337 | -8.845 |
| 1 | -9.871 | -9.871 | -10.091 | -10.703 |
| 0 | -12.246 | -12.246 | -12.538 | -13.149 |

Segments(R,S)   R 9   S 7
b(s,r)

| s | 3 | 2 | 1 | 0 |
|---|---|---|---|---|
| r | | | | |
| 3 | -7.322 | -7.830 | -8.596 | -9.687 |
| 2 | -8.845 | -9.353 | -10.232 | -11.322 |
| 1 | -10.703 | -11.315 | -12.013 | -13.352 |
| 0 | -13.149 | -13.761 | -14.691 | -16.030 |

Segments(R,S)   R 9   S 8
b(s,r)

| s | 3 | 2 | 1 | 0 |
|---|---|---|---|---|
| r | | | | |
| 3 | -9.687 | -10.777 | -12.190 | -14.081 |
| 2 | -11.322 | -12.413 | -14.081 | -15.972 |
| 1 | -13.352 | -14.691 | -16.031 | -18.346 |
| 0 | -16.030 | -17.368 | -19.117 | -21.432 |

Segments(R,S)   R 9   S 9
b(s,r)

| s | 3 | 2 | 1 | 0 |
|---|---|---|---|---|
| r | | | | |
| 3 | -14.081 | -15.972 | -18.346 | -21.432 |
| 2 | -15.972 | -17.862 | -20.660 | -23.746 |
| 1 | -18.346 | -20.660 | -23.029 | -26.637 |
| 0 | -21.432 | -23.746 | -26.637 | -30.245 |

Segments(R,S)   R 9   S10
b(s,r)

| s | 3 | 2 | 1 | 0 |
|---|---|---|---|---|
| r | | | | |
| 3 | -21.432 | -24.518 | -28.338 | -32.997 |
| 2 | -23.746 | -26.833 | -31.133 | -35.792 |
| 1 | -26.637 | -30.245 | -34.247 | -39.197 |
| 0 | -30.245 | -33.853 | -38.207 | -43.157 |

Table IV, Page 20

Segments(R,S)   R10   S 1
b(s,r)

| s | 3 | 2 | 1 | 0 |
|---|---|---|---|---|
| r | | | | |
| 3 | −43.157 | −38.207 | −33.853 | −30.245 |
| 2 | −47.117 | −42.167 | −37.461 | −33.853 |
| 1 | −51.668 | −47.115 | −42.167 | −38.207 |
| 0 | −56.222 | −51.668 | −47.117 | −43.157 |

Segments(R,S)   R10   S 2
b(s,r)

| s | 3 | 2 | 1 | 0 |
|---|---|---|---|---|
| r | | | | |
| 3 | −30.245 | −26.637 | −23.746 | −21.432 |
| 2 | −33.853 | −30.245 | −26.833 | −24.518 |
| 1 | −38.207 | −34.247 | −31.133 | −28.338 |
| 0 | −43.157 | −39.197 | −35.792 | −32.997 |

Segments(R,S)   R10   S 3
b(s,r)

| s | 3 | 2 | 1 | 0 |
|---|---|---|---|---|
| r | | | | |
| 3 | −21.432 | −19.117 | −17.368 | −16.030 |
| 2 | −24.518 | −22.203 | −20.046 | −18.707 |
| 1 | −28.338 | −25.543 | −23.750 | −22.050 |
| 0 | −32.997 | −30.201 | −28.000 | −26.300 |

Segments(R,S)   R10   S 4
b(s,r)

| s | 3 | 2 | 1 | 0 |
|---|---|---|---|---|
| r | | | | |
| 3 | −16.030 | −14.691 | −13.761 | −13.149 |
| 2 | −18.707 | −17.368 | −16.207 | −15.596 |
| 1 | −22.050 | −20.350 | −19.437 | −18.646 |
| 0 | −26.300 | −24.600 | −23.396 | −22.604 |

Segments(R,S)   R10   S 5
b(s,r)

| s | 3 | 2 | 1 | 0 |
|---|---|---|---|---|
| r | | | | |
| 3 | −13.149 | −12.538 | −12.246 | −12.246 |
| 2 | −15.596 | −14.984 | −14.620 | −14.620 |
| 1 | −18.646 | −17.854 | −17.574 | −17.574 |
| 0 | −22.604 | −21.813 | −21.432 | −21.432 |

Table IV, Page 21

```
Segments(R,S)   R10    S 6
b(s,r)
         s       3                 2                 1                 0
r
3          -12.246           -12.246           -12.538           -13.149
2          -14.620           -14.620           -14.984           -15.596
1          -17.574           -17.574           -17.854           -18.646
0          -21.432           -21.432           -21.813           -22.604

Segments(R,S)   R10    S 7
b(s,r)
         s       3                 2                 1                 0
r
3          -13.149           -13.761           -14.691           -16.030
2          -15.596           -16.207           -17.368           -18.707
1          -18.646           -19.437           -20.350           -22.050
0          -22.604           -23.396           -24.600           -26.300

Segments(R,S)   R10    S 8
b(s,r)
         s       3                 2                 1                 0
r
3          -16.030           -17.368           -19.117           -21.432
2          -18.707           -20.046           -22.203           -24.518
1          -22.050           -23.750           -25.543           -28.338
0          -26.300           -28.000           -30.201           -32.997

Segments(R,S)   R10    S 9
b(s,r)
         s       3                 2                 1                 0
r
3          -21.432           -23.746           -26.637           -30.245
2          -24.518           -26.833           -30.245           -33.853
1          -28.338           -31.133           -34.247           -38.207
0          -32.997           -35.792           -39.197           -43.157

Segments(R,S)   R10    S10
b(s,r)
         s       3                 2                 1                 0
r
3          -30.245           -33.853           -38.207           -43.157
2          -33.853           -37.461           -42.167           -47.117
1          -38.207           -42.167           -47.115           -51.668
0          -43.157           -47.117           -51.668           -56.222
```

---

## Claims

1. A method for producing an optically effective arrangement comprising a reflective surface, said arrangement having a light source related to an optical axis which extends in alignment with the optical arrangement for distributing the light of said light source reflected by said reflective surface according to a desired light pattern, **characterized** by the steps of:

formulating an initial mathematical representation of at least a region of an approximated surface of said reflective surface,

mathematically manipulating of said initial representation until the resulting mathematical surface representation achieves the desired optical properties,

deriving from the resulting mathematical representation computer input data in computer input format, and

inputting said data to a computer for controlling an apparatus by which the mathematical representation of said optical surface is reproduced in physical form.

2. The method according to claim 1, in which the steps of formulating and manipulating said initial mathematical representation are further characterized by the steps:

formulating said initial mathematical representation of the entire approximated surface, said representation having mathematical properties such that mathematical manipulation of local regions does not influence optical properties of other regions

mathematically manipulating of said local regions until the resulting mathematical surface representation achieves the desired optical properties.

3. The method according to claim 2, in which the manipulation of said initial mathematical representation is characterized by

dividing said initial mathematical representation of said approximated surface into quadrangular initial surface segments by means of two families of planes which intersect said approximated surface, the planes of each of said families being parallel to each other and to said optical axis, and the planes of one of said families being normal to the planes of the other of said families;

determining the position of the corners of each of said initial surface segments;

determining the coefficients of initial bivariate polynomials from said corners, which coefficients define further surface segments approximated to said initial surface segments; and

varying the corners of said further surface segments step by step parallel to said axis for determining the coefficients of subsequent surface segments until the resulting mathematical representation achieves the desired optical properties.

4. The method according to claim 3, in which the step of determining the coefficients of initial bivariate polynomials from said corners is characterized by using the Bezier method for calculating the coefficients ($b_{00}$ through $b_{33}$) of the initial and further polynomials from the corners ($b_{00}$, $b_{03}$, $b_{30}$, $b_{33}$) of said initial and further surface segments.

5. The method according to claim 3 or 4, characterized by the step of:

using cubic polynomials for adjacent further and subsequent surface segments having common sides;

said surface segments being equal within their common sides through the second derivatives of their polynomials.

6. The method according to claim 2, characterized by the steps of:

determining bivariate polynomials describing initial surface segments having desired optical properties of said at least one region of said optical surface;

determining further bivariate polynomials describing further initial surface segments located adjacent to said region;

determining additional bivariate polynomials which describe additional surface segments adjacent to already determined regions until said approximate surface to said optical surface is achieved;

changing locally said approximate surface by varying coefficients of said polynomials while retaining continuity through the second derivatives within the varied region without influencing optical properties of other regions of said approximate surface until the resulting representation of said optical surface achieves desired optical properties.

7. The method according to claim 6, wherein the steps of determining said further and said additional bivariate polynomials as well as varying said coefficients of said polynomials are achieved by the B-spline method.

8. The method according to claim 1, in which the steps of formulating said mathematical representation

54

is further characterized by the steps of :

formulating said mathematical representation of the entire approximated surface by means of the formula

$$X = \cfrac{\cfrac{rho^2}{R\,(phi)}}{1 + \sqrt{1-(K(phi)+1)\cdot \cfrac{rho^2}{R(phi)}}} + \sum_{n=0}^{n=ne} AK_n(phi)\cdot rho^n,$$

wherein

$$R(phi) = \sum_{m=0}^{n=me} [Rc_m\cdot\cos(m\cdot phi)+Rs_m\cdot\sin(m\cdot phi)],$$

$$K(phi) = \sum_{i=0}^{i=ie} [Kc_i\cdot\cos(i\cdot phi)+Ks_i\cdot\sin(i\cdot phi)],$$

$$AK_n(phi) = \sum_{k=0}^{k=ke} [AKc_{nk}\cdot\cos(k\cdot phi)+AKs_{nk}\cdot\sin(k\cdot phi)]$$

and wherein :

X represents a linear cylindrical coordinate of the headlight axis which extends substantially in the direction of the light beam produced by the optically effective surface,

rho is the radius vector of said cylindrical coordinates,

phi represents the polar angle of said cylindrical coordinates of the loci,

n represents integers from 0 through 50, preferably through 10,

m, i and k represents integers from 0 through at least 3, preferably through 20.

R(phi) represents a coefficient which depends on phi and defines the limit value of the radii of curvature of the conic part of the surface at the apex with axial planes extending through the headlight axis when X = 0,

K(phi) represents a conic section coefficient as a function of phi,

$AK_n$(phi) represents one of ne + 1 different aspheric coefficients as functions of phi,

$Rc_m$ and $Rs_m$ each represent one of me + 1, and

$Kc_i$ and $Ks_i$ each represent one of ie + 1 different constant parameters,

$AKc_{nk}$ and $AKs_{nk}$ each represents one of (ne + 1)·(ke + 1) different constant parameters.

mathematically manipulating said parameters until the resulting mathematical representation achieves the desired optical properties.

9. The method according to one of the claims 1 through 8, including the additional step of programming said computer to control said apparatus to physically reproduce said optical surface in the form of a mold by which a surface of a vehicular headlight can be replicated.

10. The method according to one of the claims 1 through 8, including the additional step of programming said computer to control said apparatus to physically reproduce said optical surface in the form in which said surface is required in said headlight.

11. A vehicular headlight in particular produced by the method according to one of the claims 1 to 10, comprising

an optically effective arrangement having reflective surface,

a light source related to an optical axis which extends in alignment with the optically effective arrangement, characterized in that said reflective surface shows axial asymmetry over its entire axial length, said surface having a mathematically continuous shape such that the beam of light reflected by said reflective surface distributes the light of said light source according to the distribution of the light pattern desired by optimally utilizing the light emitted by the light source.

12. A vehicular headlight according to claim 11, characterized by

an optical element (2) arranged in the light beam reflected by said reflective surface (1),

said optical element having an optically effective surface which together with said reflective surface forms said optically effective arrangement.

13. A vehicular headlight according to claim 11 or 12, characterized in that said continuous surface satisfies one single mathematical formula.

14. A vehicular headlight according to claim 13, characterized in that the optically effective surface is designed according to the following formula :

$$X = \frac{\dfrac{rho^2}{R\,(phi)}}{1 + \sqrt{1-(K(phi)+1)\cdot \dfrac{rho^2}{R(phi)}}} + \sum_{n=0}^{n=ne} AK_n(phi)\cdot rho^n,$$

wherein

$$R(phi) = \sum_{m=0}^{n=me} [Rc_m\cdot\cos(m\cdot phi)+Rs_m\cdot\sin(m\cdot phi)],$$

$$K(phi) = \sum_{i=0}^{i=ie} [Kc_i\cdot\cos(i\cdot phi)+Ks_i\cdot\sin(i\cdot phi)],$$

$$AK_n(phi) = \sum_{k=0}^{k=ke} [AKc_{nk}\cdot\cos(k\cdot phi)+AKs_{nk}\cdot\sin(k\cdot phi)]$$

and wherein

X represents a linear cylindrical coordinate of the headlight axis which extends substantially in the direction of the light beam produced by the optically effective surface,

rho is the radius vector of said cylindrical coordinates,

phi represents the polar angle of said cylindrical coordinates of the loci,

n represents integers from 0 through 50, preferably through 10,

m, i and k represents integers from 0 through at least 3, preferably through 20.

R(phi) represents a coefficient which depends on phi and defines the limit value of the radii of curvature of the conic part of the surface at the apex with axial planes extending through the headlight axis when X = 0,

K(phi) represents a conic section coefficient as a function of phi,

$AK_n$(phi) represents one of ne + 1 different aspheric coefficients as functions of phi,

$Rc_m$ and $Rs_m$ each represent one of me + 1, and

$Kc_i$ and $Ks_i$ each represent one of ie + 1 different constant parameters,

$AKc_{nk}$ and $AKs_{nk}$ each represents one of (ne + 1)·(ke + 1) different constant parameters.

15. A vehicular headlight according to claim 11 or 12, characterized in that said continuous surface is formulated by a mathematical representation having mathematical properties such that mathematical manipulation of local regions does not influence optical properties of other regions.

16. A vehicular headlight according to claim 15, characterized in that said continuous surface is partitioned into quadrangular segments by intersection with two families of parallel planes, the planes of each family being parallel to each other and to said optical axis and the planes of one of said families being normal the planes of the other of said families, said surface segments so delineated being defined by bivariate polynomials constrained so that adjacent segments are joined to form a continuous surface such that said mathematically continuous surface has at least two continuous derivatives everywhere, coefficients of said bivariate polynomials being determined by values of said polynomials at the corners of said segments and by said constraints on joining of adjacent segments.

## Ansprüche

1. Verfahren zur Herstellung einer eine Reflexionsfläche aufweisenden optisch wirksamen Anordnung mit einer der optischen Achse der Anordnung zugeordneten Lichtquelle, wobei die Abstrahlung des von der Reflexionsfläche reflektierten Lichts der Lichtquelle nach einem gewünschten Verteilungsmuster erfolgt, **gekennzeichnet** durch folgende Schritte :

Formulieren einer ersten mathematischen Darstellung mindestens eines Teilbereichs der durch Näherung bestimmten Reflexionsfläche,

Manipulieren der ersten mathematischen Darstellung so lange, bis die sich ergebende mathematische Flächendarstellung die gewünschten optischen Eigenschaften aufweist,

Ableiten von durch Computer verarbeitbaren Daten aus dem Ergebnis der mathematischen Darstellung,

Eingeben der Daten in einen Computer zur Steuerung einer Einrichtung, welche die mathematische Darstellung der optischen Fläche körperlich reproduziert.

2. Verfahren nach Anspruch 1, bei dem die Schritte des Formulierens und Manipulierens der ersten mathematischen Darstellung durch folgende weiteren Schritte gekennzeichnet sind :

Formulieren der ersten mathematischen Darstellung des Gesamtbereichs der durch Näherung bestimmten Reflexionsfläche, wobei ein mathematisches Manipulieren der Darstellung lokaler Teilbereiche die optischen Eigenschaften der übrigen Teilbereiche nicht beeinflußt,

Manipulieren lokaler Teilbereiche so lange, bis die sich ergebende mathematische Flächendarstellung die gewünschten optischen Eigenschaften aufweist.

3. Verfahren nach Anspruch 2, bei dem die Manipulation der ersten mathematischen Darstellung durch folgende Schritte gekennzeichnet ist :

Unterteilen der ersten mathematischen Darstellung der angenäherten Fläche in viereckige erste Flächensegmente mittels zweier Scharen von Ebenen, welche die angenäherte Fläche schneiden, wobei die Ebenen jeder dieser Scharen zueinander und zur optischen Achse parallel sind und die Ebenen einer dieser Scharen zu den Ebenen der anderen Scharen senkrecht verlaufen ;

Bestimmen der Lage der Eckpunkte jedes der ersten Flächensegmente ;

Bestimmen der Koeffizienten der ersten Bipolynome ausgehend von den Eckpunkten, wobei die Koeffizienten den ersten Flächensegmenten ungefähr entsprechende weitere Flächensegmente bilden ; und

Schrittweise erfolgendes Variieren der Lage der Eckpunkte der weiteren Flächensegmente parallel zur optischen Achse zur Bestimmung der Koeffizienten darauffolgender Flächensegmente, bis die sich ergebende mathematische Darstellung die gewünschten optischen Eigenschaften aufweist.

4. Verfahren nach Anspruch 3, bei dem das Bestimmen der Koeffizienten der ersten Bipolynome der Eckpunkte gekennzeichnet ist durch Anwendung des Bezier-Verfahrens zur Berechnung der Koeffizienten ($b_{00}$ bis $b_{33}$) der ersten und weiteren Polynome der Eckpunkte ($b_{00}$, $b_{03}$, $b_{30}$, $b_{33}$) der ersten und weiteren Flächensegmente.

5. Verfahren nach Anspruch 3 oder 4, gekennzeichnet durch die Verwendung kubischer Polynome für gemeinsame seitenbesitzende angrenzende weitere und darauffolgende Flächensegmente, wobei die Flächensegmente bezüglich ihrer gemeinsamen Seiten derart gleich sind, daß sie den zweiten Ableitungen ihrer Polynome genügen.

6. Verfahren nach Anspruch 2, gekennzeichnet durch folgende Schritte :

Bestimmen von Bipolynomen, welche die ersten Flächensegmente beschreiben, die die gewünschten optischen Eigenschaften mindestens eines Teilbereichs der optischen Fläche besitzen ;

Bestimmen weiterer Bipolynome, welche die weiteren ersten Flächensegmente beschreiben, die an den einen Bereich angrenzen ;

Bestimmen zusätzlicher Bipolynome, welche zusätzliche an bereits bestimmte Bereiche angrenzende Flächensegmente beschreiben, bis eine der optischen Fläche angenäherte Fläche erreicht ist ;

lokales Verändern der angenäherten Flächen durch Variieren der Koeffizienten der Polynome unter Beibehaltung der Kontinuität bis zu den zweiten Ableitungen innerhalb des veränderten Bereichs, ohne die optischen Eigenschaften der anderen Bereiche der angenäherten Fläche zu beeinflussen, bis die sich ergebende Darstellung der optischen Fläche die gewünschten optischen Eigenschaften aufweist.

7. Verfahren nach Anspruch 6, dadurch gekennzeichnet, daß mittels des B-Spline-Berechnungsverfahrens die weiteren und zusätzlichen Bipolynome bestimmt und die Koeffizienten der Polynome variiert werden.

8. Verfahren nach Anspruch 1, bei dem das Formulieren der mathematischen Darstellung durch folgende weitere Schritte gekennzeichnet ist :

Formulieren der mathematischen Darstellung der durch Näherung bestimmten Gesamtfläche mittels der Formel

$$X = \frac{\frac{rho^2}{R\ (phi)}}{1 + \sqrt{1-(K(phi)+1)\cdot \frac{rho^2}{R(phi)^2}}} + \sum_{n=0}^{n=ne} AK_n(phi)\cdot rho^n,$$

wobei

$$R(phi) = \sum_{m=0}^{n=me} [Rc_m\cdot cos(m\cdot phi)+Rs_m\cdot sin(m\cdot phi)],$$

$$K(phi) = \sum_{i=0}^{i=ie} [Kc_i\cdot cos(i\cdot phi)+Ks_i\cdot sin(i\cdot phi)],$$

$$AK_n(phi) = \sum_{k=0}^{k=ke} [AKc_{nk}\cdot cos(k\cdot phi)+AKs_{nk}\cdot sin(k\cdot phi)]$$

und worin

X eine lineare zylindrische Koordinate der Scheinwerferachse, welche im wesentlichen in Richtung des von der optisch wirksamen Fläche erzeugten Lichtbündels verläuft,
rho den Radiusvektor der zylindrischen Koordinaten,
phi den Polarwinkel der zylindrischen Koordinaten der geometrischen Orte,
n ganze Zahlen von null bis 50, vorzugsweise bis 10,
m, i und K ganze Zahlen von null bis mindestens 3, vorzugsweise bis 20,
R(phi) einen Koeffizienten in Abhängigkeit von phi, der den Grenzwert der Krümmungsradien des kegelartigen Teils der Fläche am Scheitelpunkt bildet, wobei die Axialebenen durch die Scheinwerferachse verlaufen, wenn X = 0 ist,
K(phi) einen Kegelschnittkoeffizienten in Abhängigkeit von phi,
$AK_n$(phi) einen von ne + 1 verschiedenen Asphäre-Koeffizienten in Abhängigkeit von phi,
$Rc_m$ und $Rs_m$ einen von me + 1 verschiedenen konstanten Parameter,
$Kc_i$ und $Ks_i$ einen von ie + 1 verschiedenen konstanten Parameter, und
$AKc_{nk}$ und $AKs_{nk}$ einen von (ne + 1)·(ke + 1) verschiedenen konstanten Parameter
bedeuten ;

Manipulieren der Parameter, bis die sich ergebende mathematische Darstellung die gewünschten optischen Eigenschaften aufweist.

9. Verfahren nach einem der Ansprüche 1 bis 8, gekennzeichnet durch folgenden zusätzlichen Schritt:

Programmieren des Computers zur Steuerung der Einrichtung zum körperlichen Reproduzieren der optischen Fläche in Gestalt einer Form, mit Hilfe derer eine Fläche eines Scheinwerfers nachbildbar ist.

10. Verfahren nach einem der Ansprüche 1 bis 8, gekennzeichnet durch folgenden zusätzlichen Schritt: Programmieren des Computers zur Steuerung der Einrichtung zum körperlichen Reproduzieren der optischen Fläche in einer zur Verwendung im Scheinwerfer erforderlichen Gestalt.

11. Scheinwerfer, insbesondere hergestellt nach dem Verfahren gemäß einem der Ansprüche 1 bis 10 und bestehend aus einer eine Reflexionsfläche aufweisenden optisch wirksamen Anordnung und einer der optischen Achse der Anordnung zugeordneten Lichtquelle, **dadurch gekennzeichnet,** daß die Reflexionsfläche über ihre gesamte axiale Länge eine axiale Asymmetrie aufweist und eine mathematisch kontinuierliche Gestalt besitzt, so daß das von der Reflexionsfläche reflektierte Lichtbündel das Licht der Lichtquelle nach einem gewünschten Verteilungsmuster unter optimaler Ausnutzung des von der Lichtquelle abgegebenen Lichts abstrahlt.

12. Scheinwerfer nach Anspruch 11, gekennzeichnet durch ein optisches Element (2) das in dem von der Reflexionsfläche (1) abgestrahlten Lichtbündel angeordnet ist und eine optisch wirksame Fläche aufweist, die zusammen mit der Reflexionsfläche die optisch wirksame Anordnung bildet.

13. Scheinwerfer nach Anspruch 11 oder 12, dadurch gekennzeichnet, daß die kontinuierliche Fläche einer einzigen mathematischen Formel genügt.

14. Scheinwerfer nach Anspruch 13, dadurch gekennzeichnet, daß die optisch wirksame Fläche nach folgender Formel ausgebildet ist :

$$X = \frac{\dfrac{rho^2}{R\ (phi)}}{1 + \sqrt{1-(K(phi)+1)\cdot \dfrac{rho^2}{R(phi)^2}}} + \sum_{n=0}^{n=ne} AK_n(phi)\cdot rho^n,$$

wobei

$$R(phi) = \sum_{m=0}^{n=me} [Rc_m \cdot \cos(m\cdot phi)+Rs_m\cdot \sin(m\cdot phi)],$$

$$K(phi) = \sum_{i=0}^{i=ie} [Kc_i\cdot \cos(i\cdot phi)+Ks_i\cdot \sin(i\cdot phi)],$$

$$AK_n(phi) = \sum_{k=0}^{k=ke} [AKc_{nk}\cdot \cos(k\cdot phi)+AKs_{nk}\cdot \sin(k\cdot phi)]$$

und worin

X eine lineare zylindrische Koordinate der Scheinwerferachse, welche im wesentlichen in Richtung des von der optisch wirksamen Fläche erzeugten Lichtbündels verläuft,

rho den Radiusvektor der zylindrischen Koordinaten,

phi den Polarwinkel der zylindrischen Koordinaten der geometrischen Orte,

n ganze Zahlen von null bis 50, vorzugsweise bis 10,

m, i und k ganze Zahlen von null bis mindestens 3, vorzugsweise bis 20,

R(phi) einen Koeffizienten in Abhängigkeit von phi, der den Grenzwert der Krümmungsradien des kegelartigen Teils der Fläche am Scheitelpunkt bildet, wobei die Axialebenen durch die Scheinwerferachse verlaufen, wenn X = 0 ist,

K(phi) einen Kegelschnittkoeffizienten in Abhängigkeit von phi,

$AK_n(phi)$ einen von ne + 1 verschiedenen Asphäre-Koeffizienten in Abhängigkeit von phi,

$Rc_m$ und $Rs_m$ einen von me + 1 verschiedenen konstanten Parameter,

$Kc_i$ und $Ks_i$ einen von ie + 1 verschiedenen konstanten Parameter und,

$AKc_{nk}$ und $AKs_{nk}$ einen von (ne + 1)·(ke + 1) verschiedenen konstanten Parameter

15. Scheinwerfer nach Anspruch 11 oder 12, dadurch gekennzeichnet, daß die kontinuierliche Fläche nach einer mathematischen Darstellung mit mathematischen Eigenschaften gebildet ist, so daß die mathematische Manipulation lokaler Bereiche die optischen Eigenschaften anderer Bereiche nicht beeinflußt.

16. Scheinwerfer nach Anspruch 15, dadurch gekennzeichnet, daß die kontinuierliche Fläche durch das Schneiden mit zwei Scharen paralleler Ebenen in viereckige Segmente unterteilt ist, wobei die Ebenen jeder Schar zueinander und zur optischen Achse parallel und die Ebenen einer dieser Scharen zu den Ebenen der anderen Schar senkrecht verlaufen, wobei die so gebildeten Flächensegmente durch Bipolynome definiert und derart begrenzt sind, daß benachbarte Segmente zur Bildung einer kontinuierlichen Fläche so verbunden werden, daß die mathematisch kontinuierliche Fläche überall mindestens eine Ableitung zweiter Ordnung besitzt, wobei die Koeffizienten der Bipolynome durch die Werte der Polynome an den Eckpunkten der Segmente und durch die Begrenzungen benachbarter Segmente bestimmt werden.

## Revendications

1. Procédé pour produire un ensemble optique efficace comprenant une surface réflectrice et une source de lumière aligné avec l'axe optique de l'ensemble optique de manière à distribuer l'énergie de la source lumineuse réfléchie par ladite surface réflectrice suivant un modèle spatial déterminé, procédé caractérisé par les opérations suivantes :

formuler mathématiquement une représentation initiale d'au moins une partie d'une surface approximative de ladite surface réflectrice,

traiter mathématiquement la représentation initiale jusqu'à ce que la représentation mathématique résultante pour la surface fournisse les propriétés optiques désirées,

dériver, de la représentation mathématique résultante, des informations d'entrées calculées sous la forme de données d'entrées d'ordinateur, et

fournir ces données d'entrées à un calculateur de commande d'un appareil qui transforme la représentation mathématique de la surface optique en une forme physique reproduite.

2. procédé selon la revendication 1, dans lequel les opérations de formulation et de traitement mathématiques sont en plus caractérisé par :

la formulation mathématique de la représentation initiale représente une approximation de la surface totale, la représentation présentant les propriétés mathématique telles que le traitement mathématique de zones locales n'influence pas les propriétés optiques des autres zones

le traitement mathématique des zones locales est poursuivi jusqu'à ce que la représentation mathématique résultante pour la surface fournisse les propriétés optiques désirées.

3. procédé suivant la revendication 2, dans lequel le traitement mathématique de la représentation initiale est caractérisé par :

la division de la représentation mathématique initiale de la surface approximative en zones initiales "rectangulaires" obtenues par l'intersection de la surface approximative par deux familles de plans orthogonales entre elles, les plans de chaque famille étant parallèles entre eux et parallèle audit axe optique ;

la détermination de la position des coins de chaque zone initiale "rectangulaire" ;

la détermination, à partir desdits coins, des coefficients des polynômes initiaux à deux variables, ces coefficients définissent des zones ultérieures servant d'approximation audites zones initiales ; et

la modification, pas à pas et parallèlement à l'axe optique, des coins desdites autres zones pour déterminer les coefficients desdites zones ultérieures jusqu'à ce que la représentation mathématique résultante fournisse les propriétés optiques désirées.

4. Procédé suivant la revendication 3, dans lequel la détermination, à partir des coins, des coefficients des polynômes initiaux à deux variables utilise la méthode de Bézier pour calculer les coefficients ($b_{00}$, ..., $b_{33}$) pour les polynômes initiaux et suivants à partir des coins ($b_{00}$, $b_{03}$, $b_{30}$, $b_{33}$) des zones initiales et ultérieures.

5. procédé suivant la revendication 3 ou la revendication 4, caractérisé par l'utilisation de polynômes d'ordre trois pour définir les zones initiales et ultérieures ayant des bords communs et en ce que, au niveaux des bords communs, les polynômes définissant les surfaces ont des valeurs égales jusqu'à la dérivée seconde.

6. Procédé selon la revendication 2, caractérisé par :

la détermination de polynômes à deux variables décrivant une portion de la surface initiale présentant les propriétés optiques désirées pour au moins une zone de la surface optique ;

la détermination de polynômes ultérieurs à deux variables décrivant des parties de surface initiale situées au voisinage de ladite portion ;

la détermination supplémentaire de polynômes à deux variables qui définissent des parties additionnelles de surfaces adjacentes aux portions déjà définies jusqu'à ce que la surface optique totale soit obtenue par la délimitation d'une surface d'approximation ;

la modification locale de la surface d'approximation en changeant les coefficients des polynômes tout en maintenant la continuité jusqu'à la dérivée seconde à l'intérieur des zones modifiées et sans influencer les propriétés optiques des autres zones de la surface d'approximation jusqu'à ce que la représentation résultante de ladite surface optique fournisse les propriétés optiques.

7. Procédé selon la revendication 6, dans lequel les déterminations des polynômes et la modification des coefficients des polynômes sont obtenues par la méthode de B-spline.

8. Procédé selon la revendication 1, dans lequel :

la formulation mathématique de la représentation de la totalité de la surface est obtenue par la formule

$$X = \frac{\dfrac{rho^2}{R(phi)}}{1 + \sqrt{1-(K(phi)+1)\cdot \dfrac{rho^2}{R(phi)}}} + \sum_{n=0}^{n=ne} AK_n(phi)\cdot rho^n,$$

dans laquelle :

$$R(phi) = \sum_{m=0}^{m=me} [Rc_m\cdot\cos(m\cdot phi)+Rs_m\cdot\sin(m\cdot phi)],$$

$$K(phi) = \sum_{i=0}^{i=ie} [Kc_i\cdot\cos(i\cdot phi)+Ks_i\cdot\sin(i\cdot phi)],$$

$$AK_n(phi) = \sum_{k=0}^{k=ke} [AKc_{nk}\cdot\cos(k\cdot phi)+AKs_{nk}\cdot\sin(k\cdot phi)]$$

et

X représente une coordonnée cylindrique suivant l'axe de l'ensemble optique, axe qui est pratiquement parallèle à la direction du faisceau de lumière produit par la surface réflectrice,

rho représente le vecteur rayon des coordonnées cylindrique

phi représente l'angle polaire des coordonnées cylindrique du point,

n représente des nombres entiers de 0 à 50, et plus particulièrement de 0 à 10,

m, i et k représente des nombres entiers de 0 à au moins 3, et de préférence jusqu'à 20,

R(phi) représente un coefficient dépendant de phi et définissant la valeur limite du rayon de courbure de la partie conique de la surface au sommet de l'ensemble optique lorsque X = 0,

K(phi) représente un coefficient de la section conique en fonction de phi,

$AK_n(phi)$ représente un des différents coefficients ne + 1 d'asphéricité en fonction de phi,

$Rc_m$ et $Rs_m$ représente chacun l'un des me + 1, et

$Kc_i$ et $Ks_i$ représente chacun l'un des ie + 1 paramètres constant,

$AKc_{nk}$ et AKs représente chacun l'un des différents paramètres (ke + 1)·(ne + 1) constant,

le traitement mathématique desdits paramètres jusqu'à ce que la représentation mathématique résultante fournisse les propriétés optiques désirées.

9. procédé selon l'une des revendications 1 à 8, comprenant l'étape supplémentaire de programmation du calculateur de commande dudit appareil transformant la représentation mathématique de la surface optique de manière à obtenir un moule permettant de dupliquer la surface d'un phare de véhicule.

10. procédé selon l'une des revendications 1 à 8, comprenant l'étape supplémentaire de programmation du calculateur de commande dudit appareil transformant la représentation mathématique de la surface optique de manière à obtenir ladite surface sur un phare de véhicule.

11. Phare du véhicule produit par le procédé suivant l'une des revendications 1 à 10, comprenant un ensemble optique efficace muni d'une surface réflectrice et une source de lumière aligné avec l'axe optique de l'ensemble optique, caractérisé en ce que la surface réflectrice présente une assymétrie axiale suivant la totalité de la longueur axiale, ladite surface présentant une forme continue du point de vue mathématique de manière que l'énergie du faisceau de lumière réfléchie par ladite surface réfléchissante soit répartie suivant un modèle de répartition désiré en utilisant de manière optimale la lumière émise par la source lumineuse.

12. phare suivant la revendication 11, caractérisé par un élément optique (2) disposé sur le faisceau réfléchi par ladite surface réflectrice (1), ledit élément optique présentant une surface optique efficace qui en association avec ladite surface réflectrice forme l'ensemble optique efficace.

13. Phare suivant la revendication 11 ou 12, caractérisé en ce que la surface continue satisfait une relation mathématique unique.

14. Phare suivant la revendication 13, caractérisé en ce que la surface optique efficace répond à la formule :

$$X = \frac{\dfrac{rho^2}{R(phi)}}{1 + \sqrt{1-(K(phi)+1)\cdot \dfrac{rho^2}{R(phi)}}} + \sum_{n=0}^{n=ne} AK_n(phi)\cdot rho^n,$$

dans laquelle :

$$R(phi) = \sum_{m=0}^{n=me} [Rc_m \cdot \cos(m\cdot phi) + Rs_m \cdot \sin(m\cdot phi)],$$

$$K(phi) = \sum_{i=0}^{i=ie} [Kc_i \cdot \cos(i\cdot phi) + Ks_i \cdot \sin(i\cdot phi)],$$

$$AK_n(phi) = \sum_{k=0}^{k=ke} [AKc_{nk} \cdot \cos(k\cdot phi) + AKs_{nk} \cdot \sin(k\cdot phi)]$$

et

X représente une coordonnée cylindrique suivant l'axe de l'ensemble optique, axe qui est pratiquement parallèle à la direction du faisceau de lumière produit par la surface réflectrice,
rho représente le vecteur rayon des coordonnées cylindrique
phi représente l'angle polaire des coordonnées cylindrique du point,
n représente des nombres entiers de 0 à 50, et plus particulièrement de 0 à 10,
m, i et k représente des nombres entiers de 0 à au moins 3, et de préférence jusqu'à 20,
R(phi) représente un coefficient dépendant de phi et définissant la valeur limite du rayon de courbure de la partie conique de la surface au sommet de l'ensemble optique lorsque X = 0,

K(phi) représente un coefficient de la section conique en fonction de phi,

$AK_n$(phi) représente un des différents coefficients ne + 1 d'asphéricité en fonction de phi,

$Rc_m$ et $Rs_m$ représente chacun l'un des me + 1, et

$Kc_i$ et $Ks_i$ représente chacun l'un des ie + 1 paramètres constant,

$AKc_{nk}$ et $AKs_{nk}$ représente chacun l'un des différents paramètres (ke + 1)·(ne + 1) constants.

15. Phare suivant l'une des revendications 11 ou 12, caractérisé en ce que la surface continue est définie par une relation mathématique dont les propriétés sont telles que le traitement mathématique de zones locales n'influence pas les propriétés optiques des autres zones.

16. Phare suivant la revendication 15, caractérisé en ce que ladite surface continue est divisé en parties "rectangulaires" par l'intersection de la surface avec deux familles de plans, les plans de chaque famille étant parallèles entre eux et parallèles à l'axe optique et les plans de l'une des familles sont perpendicalaires aux plans de l'autre famille, lesdites parties ainsi délimitées sont définies par des polynômes à deux variables qui sont contraints de manière à ce que des parties adjacentes se rejoignent par des surfaces continues afin que les surface mathématiquement continues présentent au moins une dérivée première et une dérivée seconde continues en tout points, les coefficients desdits polynômes étant déterminés par les valeurs desdits polynômes aux "coins" desdites parties et par les contraintes à la jonction desdites parties.

FIG. 1

FIG 2

FIG. 3a

FIG. 3b

| 25 % | 0 % |
|---|---|
| 25 % | 50 % |

| $33\frac{1}{3}$% | 0 % |
|---|---|
| $33\frac{1}{3}$% | $33\frac{1}{3}$% |

KODAK AG
STUTTGART

Fig. 4

Fig. 5

Fig. 6